(19) Europäisches Patentamt
European Patent Office
Office européen des brevets

(11) **EP 3 944 238 B1**

(12) **EUROPEAN PATENT SPECIFICATION**

(45) Date of publication and mention
of the grant of the patent:
**15.11.2023  Bulletin 2023/46**

(21) Application number: **20799277.7**

(22) Date of filing: **21.04.2020**

(51) International Patent Classification (IPC):
**G10L 21/0308** (2013.01)    **G10L 21/0272** (2013.01)
**G10L 25/78** (2013.01)    G10L 17/00 (2013.01)

(52) Cooperative Patent Classification (CPC):
**G10L 21/0308;** G10L 17/00

(86) International application number:
**PCT/CN2020/085800**

(87) International publication number:
**WO 2020/221059 (05.11.2020 Gazette 2020/45)**

(54) **AUDIO SIGNAL PROCESSING METHOD AND RELATED PRODUCT**

AUDIOSIGNALVERARBEITUNGSVERFAHREN UND ZUGEHÖRIGE VORRICHTUNG

PROCÉDÉ DE TRAITEMENT DE SIGNAUX AUDIO ET PRODUIT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.04.2019  CN 201910369726**

(43) Date of publication of application:
**26.01.2022  Bulletin 2022/04**

(73) Proprietor: **Huawei Technologies Co., Ltd.**
**Shenzhen, Guangdong 518129 (CN)**

(72) Inventors:
• **LI, Chunjian**
**Shenzhen, Guangdong 518129 (CN)**
• **SHI, Dong**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
**CN-A- 105 989 851      CN-A- 107 919 133
CN-A- 108 877 831      CN-A- 110 111 808
JP-A- 2007 156 300      JP-A- 2012 173 584
US-A1- 2009 310 444      US-A1- 2012 045 066
US-A1- 2018 277 120**

**EP 3 944 238 B1**

**Description**

This application claims priority to Chinese Patent Application No. 201910369726.5, filed with the China National Intellectual Property Administration on April 30, 2019 and entitled "AUDIO SIGNAL PROCESSING METHOD AND RELATED PRODUCT".

**TECHNICAL FIELD**

This application relates to the field of audio signal processing technologies, and in particular, to an audio processing method and a related product.

**BACKGROUND**

With the development of network and communications technologies, audio and video technologies, the network and communications technologies, and the like can be used to implement multi-party calls in complex acoustic environment scenarios. In many application scenarios, for example, in a large conference room, one party on a call involves a plurality of participants. To facilitate generation of a text and a conference summary in a later period, speaker diarization (English: speaker diarization) is usually performed on an audio signal to segment the entire audio signal into different segments and label speakers and the audio segments correspondingly. In this way, a speaker at each moment can be clearly known, and a conference summary can be quickly generated.

In a conventional technology, it is difficult to distinguish speakers with similar voices by using a single microphone-based speaker diarization technology; and it is difficult to distinguish speakers at angles close to each other by using a multi-microphone-based speaker diarization system, and the system is significantly affected by reverb in a room, and has low diarization accuracy. Therefore, the conventional technology has low speaker diarization accuracy. An exemplary approach for sound source direction estimation that can be applied for speaker diarization is disclosed in accuracy. US 2009/0310444 A1.

**SUMMARY**

Embodiments of this application provide an audio signal processing method, to improve speaker diarization accuracy to facilitate generation of a conference record, thereby improving user experience.

According to a first aspect, an embodiment of this application provides an audio signal processing method, including:

receiving N channels of observed signals collected by a microphone array, and performing blind source separation on the N channels of observed signals to obtain M channels of source signals and M demixing matrices, where the M channels of source signals are in a one-to-one correspondence with the M demixing matrices, N is an integer greater than or equal to 2, and M is an integer greater than or equal to 1;

obtaining a spatial characteristic matrix corresponding to the N channels of observed signals, where the spatial characteristic matrix is used to represent a correlation between the N channels of observed signals;

obtaining a preset audio feature of each of the M channels of source signals; and

determining, based on the preset audio feature of each channel of source signal, the M demixing matrices, and the spatial characteristic matrix, a speaker quantity and a speaker identity corresponding to the N channels of observed signals.

It can be learned that, the solution in this embodiment of this application is a speaker diarization technology based on a multi-microphone system, the spatial characteristic matrix and the preset audio feature are introduced, and speaker diarization can be implemented through speaker clustering by using the spatial characteristic matrix, the preset audio feature, and the demixing matrices, without knowing arrangement information of the microphone array in advance. In this way, a prior-art problem that diarization accuracy is reduced due to component aging is resolved. In addition, scenarios in which angles of speakers are close to each other and a speaker moves can be recognized due to the introduction of the audio feature, thereby further improving speaker diarization accuracy.

In some possible implementations, the obtaining a preset audio feature of each of the M channels of source signals includes: segmenting each of the M channels of source signals into Q audio frames, where Q is an integer greater than 1; and obtaining a preset audio feature of each audio frame of each channel of source signal. The source signal is segmented to help perform clustering subsequently by using the preset audio feature.

In some possible implementations, the obtaining a spatial characteristic matrix corresponding to the N channels of observed signals includes: segmenting each of the N channels of observed signals into Q audio frames; determining, based on N audio frames corresponding to each audio frame group, a spatial characteristic matrix corresponding to each first audio frame group, to obtain Q spatial characteristic matrices, where N audio frames corresponding to each first audio frame group are N audio frames of the N channels of observed signals in a same time window; and obtaining the spatial characteristic matrix corresponding to the N channels of observed signals based on the Q spatial characteristic matrices, where

$$c^F(k,n) = \frac{X^F(k,n) * X^{FH}(k,n)}{\left\| X^F(k,n) * X^{FH}(k,n) \right\|},$$

where $c^F(k, n)$ represents the spatial characteristic matrix corresponding to each first audio frame group, n represents frame sequence numbers of the Q audio frames, k represents a frequency index of an $n^{th}$ audio frame, $X^F(k, n)$ represents a column vector formed by a representation of a $k^{th}$ frequency of an $n^{th}$ audio frame of each channel of observed signal in frequency domain, $X^{FH}(k, n)$ represents a transposition of $X^F(k, n)$, n is an integer, and $1 \leq n \leq Q$. It can be learned that, because a spatial characteristic matrix reflects information about a position of a speaker relative to a microphone, a quantity of positions at which a speaker is located in a current scenario can be determined by introducing the spatial characteristic matrix, without knowing the arrangement information of the microphone array in advance.

In some possible implementations, the determining, based on the preset audio feature of each channel of source signal, the M demixing matrices, and the spatial characteristic matrix, a speaker quantity and a speaker identity corresponding to the N channels of observed signals includes: performing first clustering on the spatial characteristic matrix to obtain P initial clusters, where each initial cluster corresponds to one initial clustering center matrix, and the initial clustering center matrix is used to represent a spatial position of a speaker corresponding to each initial cluster, and P is an integer greater than or equal to 1; determining M similarities, where the M similarities are similarities between the initial clustering center matrix corresponding to each initial cluster and the M demixing matrices; determining, based on the M similarities, a source signal corresponding to each initial cluster; and performing second clustering on a preset audio feature of the source signal corresponding to each initial cluster, to obtain the speaker quantity and the speaker identity corresponding to the N channels of observed signals. It can be learned that, first clustering is performed first by using the spatial characteristic matrix to determine specific positions at which a speaker speaks in the current scenario, to obtain an estimated quantity of speakers; and then second clustering is performed by using the preset audio feature, to split or combine the initial clusters obtained through first clustering, to obtain an actual quantity of speakers in the current scenario. In this way, the speaker diarization accuracy is improved.

In some possible implementations, the determining, based on the M similarities, a source signal corresponding to each initial cluster includes: determining a maximum similarity in the M similarities; determining, as a target demixing matrix, a demixing matrix that is in the M demixing matrices and that is corresponding to the maximum similarity; and determining a source signal corresponding to the target demixing matrix as the source signal corresponding to each initial cluster. It can be learned that, first clustering is performed by using the spatial characteristic matrix, to determine specific positions at which a speaker speaks in the current scenario; and then a source signal corresponding to each speaker is determined by using similarities between the spatial characteristic matrix and the demixing matrices. In this way, the source signal corresponding to each speaker is quickly determined.

In some possible implementations, the performing second clustering on a preset audio feature of the source signal corresponding to each initial cluster, to obtain the speaker quantity and the speaker identity corresponding to the N channels of observed signals includes: performing second clustering on the preset audio feature of the source signal corresponding to each initial cluster, to obtain H target clusters, where the H target clusters represent the speaker quantity corresponding to the N channels of observed signals, each target cluster corresponds to one target clustering center, each target clustering center includes one preset audio feature and at least one initial clustering center matrix, a preset audio feature corresponding to each target cluster is used to represent a speaker identity of a speaker corresponding to the target cluster, and at least one initial clustering center matrix corresponding to each target cluster is used to represent a spatial position of the speaker. It can be learned that clustering is performed by using the preset audio features corresponding to each channel of source signal, and a splitting operation or a combination operation is performed on initial clusters corresponding to all the channels of source signals, to obtain target clusters corresponding to the M channels of source signals. Two channels of source signals separated because a speaker moves are combined into one target cluster, and two speakers at angles close to each other are split into two target clusters. In this way, the two speakers at angles close to each other are segmented, thereby improving the speaker diarization accuracy.

In some possible implementations, the method further includes: obtaining, based on the speaker quantity and the speaker identity corresponding to the N channels of observed signals, output audio including a speaker label. It can be learned that the audio signal is segmented based on the speaker identity and the speaker quantity that are obtained through clustering, and a speaker identity and a speaker quantity corresponding to each audio frame are determined.

This facilitates generation of a conference summary in a conference room environment.

In some possible implementations, the obtaining, based on the speaker quantity and the speaker identity corresponding to the N channels of observed signals, output audio including a speaker label includes: determining K distances, where the K distances are distances between the spatial characteristic matrix corresponding to each first audio frame group and the at least one initial clustering center matrix corresponding to each target cluster, each first audio frame group includes N audio frames of the N channels of observed signals in a same time window, and K≥H; determining, based on the K distances, L target clusters corresponding to each first audio frame group, where L≤H; extracting, from the M channels of source signals, L audio frames corresponding to each first audio frame group, where a time window corresponding to the L audio frames is the same as a time window corresponding to the first audio frame group; determining L similarities, where the L similarities are similarities between a preset audio feature of each of the L audio frames and preset audio features corresponding to the L target clusters; determining, based on the L similarities, a target cluster corresponding to each of the L audio frames; and obtaining, based on the target cluster corresponding to each audio frame, the output audio including the speaker label, where the speaker label is used to indicate a speaker quantity and/or a speaker identity corresponding to each audio frame of the output audio. It can be learned that, the audio signal is segmented and labeled based on the speaker identity and the speaker quantity that are obtained through clustering, a speaker quantity corresponding to each audio frame group is first determined by using a spatial characteristic matrix, and then a source signal corresponding to each speaker is determined by using a preset audio feature of each audio frame of the source signal. In this way, the audio is segmented according to two steps and is labeled, thereby improving the speaker diarization accuracy.

In some possible implementations, the obtaining, based on the speaker quantity and the speaker identity corresponding to the N channels of observed signals, output audio including a speaker label includes: determining H similarities, where the H similarities are similarities between a preset audio feature of each audio frame in each second audio frame group and preset audio features of the H target clusters, and each second audio frame group includes audio frames of the M channels of source signals in a same time window; determining, based on the H similarities, a target cluster corresponding to each audio frame in each second audio frame group; and obtaining, based on the target cluster corresponding to each audio frame, the output audio including the speaker label, where the speaker label is used to indicate a speaker quantity and/or a speaker identity corresponding to each audio frame of the output audio. It can be learned that the audio is segmented and labeled directly by using an audio feature, thereby increasing a speaker diarization speed.

According to a second aspect, an embodiment of this application provides an audio processing apparatus, including:

> an audio separation unit, configured to: receive N channels of observed signals collected by a microphone array, and perform blind source separation on the N channels of observed signals to obtain M channels of source signals and M demixing matrices, where the M channels of source signals are in a one-to-one correspondence with the M demixing matrices, N is an integer greater than or equal to 2, and M is an integer greater than or equal to 1;
> a spatial feature extraction unit, configured to obtain a spatial characteristic matrix corresponding to the N channels of observed signals, where the spatial characteristic matrix is used to represent a correlation between the N channels of observed signals;
> an audio feature extraction unit, configured to obtain a preset audio feature of each of the M channels of source signals; and
> a determining unit, configured to determine, based on the preset audio feature of each channel of source signal, the M demixing matrices, and the spatial characteristic matrix, a speaker quantity and a speaker identity corresponding to the N channels of observed signals.

It can be learned that, the solution in this embodiment of this application is a speaker diarization technology based on a multi-microphone system, the spatial characteristic matrix and the preset audio feature are introduced, and speaker diarization can be implemented through speaker clustering by using the spatial characteristic matrix, the preset audio feature, and the demixing matrices, without knowing arrangement information of the microphone array in advance. In this way, a prior-art problem that diarization accuracy is reduced due to component aging is resolved. In addition, scenarios in which angles of speakers are close to each other and a speaker moves can be recognized due to the introduction of the audio feature, thereby further improving speaker diarization accuracy.

In some possible implementations, when obtaining the preset audio feature of each of the M channels of source signals, the audio feature extraction unit is specifically configured to: segment each of the M channels of source signals into Q audio frames, where Q is an integer greater than 1; and obtain a preset audio feature of each audio frame of each channel of source signal.

In some possible implementations, when obtaining the spatial characteristic matrix corresponding to the N channels of observed signals, the spatial feature extraction unit is specifically configured to: segment each of the N channels of observed signals into Q audio frames; determine, based on N audio frames corresponding to each audio frame group, a spatial characteristic matrix corresponding to each first audio frame group, to obtain Q spatial characteristic matrices, where N audio frames corresponding to each first audio frame group are N audio frames of the N channels of observed signals in a same time window; and obtain the spatial characteristic matrix corresponding to the N channels of observed signals based on the Q spatial characteristic matrices, where

$$ c^{F}(k, n) = \frac{X^{F}(k, n) * X^{FH}(k, n)}{\left\| X^{F}(k, n) * X^{FH}(k, n) \right\|}, $$

where
$c^{F}(k, n)$ represents the spatial characteristic matrix corresponding to each first audio frame group, n represents frame sequence numbers of the Q audio frames, k represents a frequency index of an $n^{th}$ audio frame, $X^{F}(k, n)$ represents a column vector formed by a representation of a $k^{th}$ frequency of an $n^{th}$ audio frame of each channel of observed signal in frequency domain, $X^{FH}(k, n)$ represents a transposition of $X^{F}(k, n)$, n is an integer, and $1 \leq n \leq Q$.

In some possible implementations, when determining, based on the preset audio feature of each channel of source signal, the M demixing matrices, and the spatial characteristic matrix, the speaker quantity and the speaker identity corresponding to the N channels of observed signals, the determining unit is specifically configured to: perform first clustering on the spatial characteristic matrix to obtain P initial clusters, where each initial cluster corresponds to one initial clustering center matrix, and the initial clustering center matrix is used to represent a spatial position of a speaker corresponding to each initial cluster, and P is an integer greater than or equal to 1; determine M similarities, where the M similarities are similarities between the initial clustering center matrix corresponding to each initial cluster and the M demixing matrices; determine, based on the M similarities, a source signal corresponding to each initial cluster; and perform second clustering on a preset audio feature of the source signal corresponding to each initial cluster, to obtain the speaker quantity and the speaker identity corresponding to the N channels of observed signals.

In some possible implementations, when determining, based on the M similarities, the source signal corresponding to each initial cluster, the determining unit is specifically configured to: determine a maximum similarity in the M similarities; determine, as a target demixing matrix, a demixing matrix that is in the M demixing matrices and that is corresponding to the maximum similarity; and determine a source signal corresponding to the target demixing matrix as the source signal corresponding to each initial cluster.

In some possible implementations, when performing second clustering on the preset audio feature of the source signal corresponding to each initial cluster, to obtain the speaker quantity and the speaker identity corresponding to the N channels of observed signals, the determining unit is specifically configured to: perform second clustering on the preset audio feature of the source signal corresponding to each initial cluster, to obtain H target clusters, where the H target clusters represent the speaker quantity corresponding to the N channels of observed signals, each target cluster corresponds to one target clustering center, each target clustering center includes one preset audio feature and at least one initial clustering center matrix, a preset audio feature corresponding to each target cluster is used to represent a speaker identity of a speaker corresponding to the target cluster, and at least one initial clustering center matrix corresponding to each target cluster is used to represent a spatial position of the speaker.

In some possible implementations, the apparatus further includes an audio segmentation unit, where the audio segmentation unit is configured to obtain, based on the speaker quantity and the speaker identity corresponding to the N channels of observed signals, output audio including a speaker label.

In some possible implementations, when obtaining, based on the speaker quantity and the speaker identity corresponding to the N channels of observed signals, the output audio including the speaker label, the audio segmentation unit is specifically configured to: determine K distances, where the K distances are distances between the spatial characteristic matrix corresponding to each first audio frame group and the at least one initial clustering center matrix corresponding to each target cluster, each first audio frame group includes N audio frames of the N channels of observed signals in a same time window, and $K \geq H$; determine, based on the K distances, L target clusters corresponding to each first audio frame group, where $L \leq H$; extract, from the M channels of source signals, L audio frames corresponding to each first audio frame group, where a time window corresponding to the L audio frames is the same as a time window corresponding to the first audio frame group; determine L similarities, where the L similarities are similarities between a preset audio feature of each of the L audio frames and preset audio features corresponding to the L target clusters; determine, based on the L similarities, a target cluster corresponding to each of the L audio frames; and obtain, based on the target cluster corresponding to each audio frame, the output audio including the speaker label, where the speaker label is used to indicate a speaker quantity and/or a speaker identity corresponding to each audio frame of the output audio.

In some possible implementations, when obtaining, based on the speaker quantity and the speaker identity corresponding to the N channels of observed signals, the output audio including the speaker label, the audio segmentation unit is specifically configured to: determine H similarities, where the H similarities are similarities between a preset audio feature of each audio frame in each second audio frame group and preset audio features of the H target clusters, and each second audio frame group includes audio frames of the M channels of source signals in a same time window; determine, based on the H similarities, a target cluster corresponding to each audio frame in each second audio frame group; and obtain, based on the target cluster corresponding to each audio frame, the output audio including the speaker label, where the speaker label is used to indicate a speaker quantity and/or a speaker identity corresponding to each audio frame of the output audio.

According to a third aspect, an embodiment of this application provides an audio processing apparatus, including:

a processor, a communications interface, and a memory that are coupled to each other, where
the communications interface is configured to receive N channels of observed signals collected by a microphone array, where N is an integer greater than or equal to 2; and
the processor is configured to: perform blind source separation on the N channels of observed signals to obtain M channels of source signals and M demixing matrices, where the M channels of source signals are in a one-to-one correspondence with the M demixing matrices, and M is an integer greater than or equal to 1; obtain a spatial characteristic matrix corresponding to the N channels of observed signals, where the spatial characteristic matrix is used to represent a correlation between the N channels of observed signals; obtain a preset audio feature of each of the M channels of source signals; and determine, based on the preset audio feature of each channel of source signal, the M demixing matrices, and the spatial characteristic matrix, a speaker quantity and a speaker identity corresponding to the N channels of observed signals.

According to a fourth aspect, an embodiment of this application further provides a computer-readable storage medium. The computer-readable storage medium stores a computer program. The computer program is executed by hardware (for example, a processor), to implement some or all of steps of any method performed by an audio processing apparatus in the embodiments of this application.

According to a fifth aspect, not comprised in the invention as claimed, an embodiment of this application provides a computer program product including instructions. When the computer program product runs on an audio processing apparatus, the audio processing apparatus is enabled to perform some or all of the steps of the audio signal processing method in the foregoing aspects.

## BRIEF DESCRIPTION OF DRAWINGS

FIG. 1A is a schematic flowchart according to an embodiment of this application;
FIG. 1B is a schematic flowchart of an audio signal processing method according to an embodiment of this application;
FIG. 2A is a schematic flowchart of another audio signal processing method according to an embodiment of this application;
FIG. 2B is a schematic diagram of a frequency representation in frequency domain according to an embodiment of this application;
FIG. 2C is a schematic diagram of a speaking scenario according to an embodiment of this application;
FIG. 2D is a schematic diagram of another speaking scenario according to an embodiment of this application;
FIG. 3 is a schematic flowchart of another audio signal processing method according to an embodiment of this application;
FIG. 4 is a schematic flowchart of another audio signal processing method according to an embodiment of this application;
FIG. 5A is a schematic diagram of displaying output audio in an interface according to an embodiment of this application;
FIG. 5B is another schematic diagram of displaying output audio in an interface according to an embodiment of this application;
FIG. 5C is another schematic diagram of displaying output audio in an interface according to an embodiment of this application;
FIG. 6 is a schematic diagram of an audio processing apparatus according to an embodiment of this application; and
FIG. 7 is a schematic diagram of an audio processing apparatus according to an embodiment of this application.

## DESCRIPTION OF EMBODIMENTS

In the specification, claims, and accompanying drawings of this application, the terms "first", "second", "third", "fourth", and the like are intended to distinguish between different objects but are not intended to describe a specific order. Moreover, the terms "include", "have", and any variants thereof mean to cover the non-exclusive inclusion. For example, a process, method, system, product, or device that includes a list of steps or units is not limited to steps or units expressly listed, but may optionally further include steps or units not expressly listed, or optionally further include other steps or units inherent to such a process, method, product, or device.

"An embodiment" mentioned in this specification means that a specific feature, result, or characteristic described with reference to this embodiment may be included in at least one embodiment of this application. The expression at various positions in this specification does not necessarily mean a same embodiment, and is not an independent or alternative embodiment mutually exclusive with other embodiments. It is understood explicitly and implicitly by a person skilled in the art that the embodiments described in this specification may be combined with other embodiments.

The following first describes a blind source separation BSS (blind source separation, BSS) technology.

The BSS technology is mainly used to resolve a "cocktail party" problem, that is, used to separate, from a given mixed signal, an independent signal generated when each person speaks. When there are M source signals, it is usually assumed that there are also M observed signals, or in other words, it is assumed that there are M microphones in a microphone array. For example, two microphones are placed at different positions in a room, two persons speak at the same time, and each microphone can collect audio signals generated when the two persons speak, and output one channel of observed signal. Assuming that two observed signals output by the two microphones are $x_1$ and $x_2$, and the two channels of source signals are $s_1$ and $s_2$, $x_1$ and $x_2$ each are formed by mixing $s_1$ and $s_2$. To be specific, $x_1 = a_{11}*s_1 + a_{12}*s_2$, and $x_2 = a_{21}*s_1 + a_{22}*s_2$. The BSS technology is mainly used to resolve how to separate $s_1$ and $s_2$ from $x_1$ and $x_2$.

When there are M channels of observed signals $x_1$, ..., and $x_M$, the BSS technology is mainly used to resolve how to separate M channels of source signals $s_1$, ..., and $s_M$ from $x_1$, ..., and $x_M$. It can be learned from the foregoing example that X=AS, $X=[x_i, ..., x_M]$, and $S=[s_i, ..., s_M]$, and A represents a hybrid matrix. It is assumed that Y=WX, where Y represents an estimate of S, W represents a demixing matrix, and W is obtained by using a natural gradient method. Therefore, during BSS, the demixing matrix W is first obtained, and then separation is performed on the observed signal X by using the demixing matrix W, to obtain the source signal S, where the demixing matrix W is obtained by using the natural gradient method.

In a conventional technology, during single microphone-based speaker diarization, diarization is performed by mainly using audio features of speakers, and diarization on speakers with similar voices (speakers whose audio features are similar) cannot be implemented, leading to low diarization accuracy. A multi-microphone-based speaker diarization system needs to obtain angles and positions of speakers, and perform speaker diarization by using the angles and the positions of the speakers. Therefore, the multi-microphone-based speaker diarization system needs to know arrangement information and spatial position information of a microphone array in advance. However, with the aging of a component, the arrangement information and the spatial position information of the microphone array change, and consequently diarization accuracy is reduced. In addition, it is difficult to distinguish speakers at angles close to each other through speaker diarization by using the angles and positions of the speakers, and the diarization is significantly affected by reverb in a room, leading to low diarization accuracy. To resolve a prior-art problem of low speaker diarization accuracy, an audio signal processing method in this application is specially provided to improve speaker diarization accuracy.

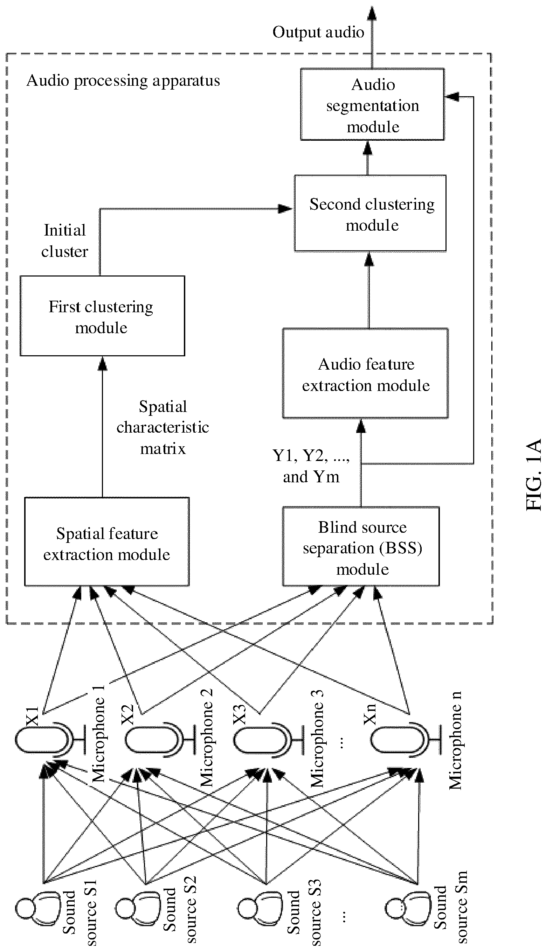

FIG. 1A is a scenario architecture diagram of an audio signal processing method. The scenario architecture diagram includes a sound source, a microphone array, and an audio processing apparatus. The audio processing apparatus includes a spatial feature extraction module, a blind source separation module, an audio feature extraction module, a first clustering module, a second clustering module, and an audio segmentation module. The microphone array is configured to collect speech audio of a speaker to obtain an observed signal. The spatial feature extraction module is configured to determine a spatial characteristic matrix corresponding to the observed signal. The blind source separation module is configured to perform blind source separation on the observed signal to obtain a source signal. The first clustering module is configured to perform first clustering on the spatial characteristic matrix to obtain an initial cluster. The audio feature extraction module is configured to perform feature extraction on the source signal to obtain a preset audio feature corresponding to the source signal. The second clustering module is configured to perform second clustering based on the preset audio feature corresponding to the source signal and the initial cluster, to obtain a target cluster. The audio segmentation module is configured to perform audio segmentation on the source signal based on the target cluster, and output an audio signal and a speaker label, where the speaker label is used to indicate a speaker quantity and/or a speaker identity corresponding to each audio frame of the output audio signal.

It can be learned that, a solution in this embodiment of this application is a speaker diarization technology based on a multi-microphone system, a spatial characteristic matrix and a preset audio feature are introduced, and speaker diarization can be implemented through speaker clustering by using the spatial characteristic matrix, the preset audio feature, and a demixing matrix, without knowing arrangement information of the microphone array in advance. In this way, a prior-art problem that diarization accuracy is reduced due to component aging is resolved. In addition, scenarios in which angles of speakers are close to each other and a speaker moves can be recognized due to the introduction of the audio feature, thereby further improving speaker diarization accuracy.

The technical solution in this embodiment of this application may be specifically implemented based on the scenario architecture diagram shown in FIG. 1A as an example.

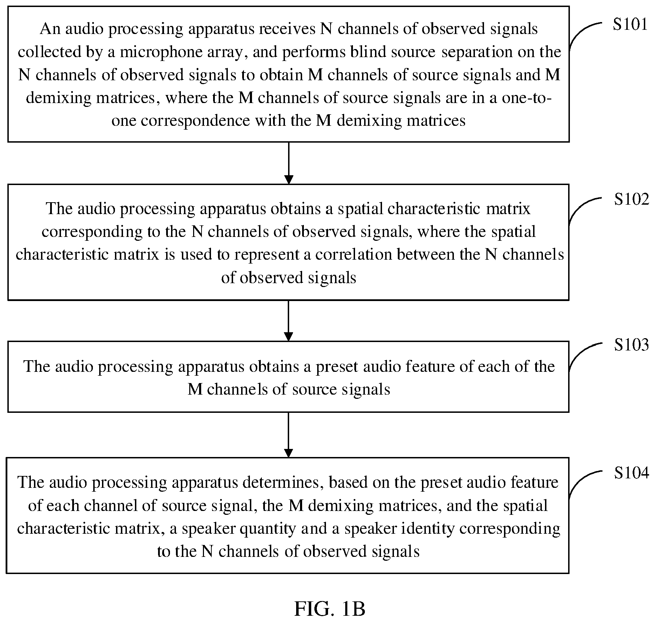

FIG. 1B is a schematic flowchart of an audio signal processing method according to an embodiment of this application. The method may include but is not limited to the following steps.

Step 101: An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices, N is an integer greater than or equal to 2, and M is an integer greater than or equal to 1.

Methods for performing blind source separation on the N channels of observed signals include a time domain separation method and a frequency domain separation method.

Step 102: The audio processing apparatus obtains a spatial characteristic matrix corresponding to the N channels of observed signals, where the spatial characteristic matrix is used to represent a correlation between the N channels of observed signals.

The correlation between the N channels of observed signals is caused because spatial positions of a speaker relative to microphones are different, or in other words, the spatial characteristic matrix reflects spatial position information of the speaker.

Step 103: The audio processing apparatus obtains a preset audio feature of each of the M channels of source signals.

The preset audio feature includes but is not limited to one or more of the following: a zero-crossing rate (ZCR), short-term energy, a fundamental frequency, and a mel-frequency cepstral coefficient (MFCC).

Step 104: The audio processing apparatus determines, based on the preset audio feature of each channel of source signal, the M demixing matrices, and the spatial characteristic matrix, a speaker quantity and a speaker identity corresponding to the N channels of observed signals.

It can be learned that, in this embodiment of this application, clustering is performed by using the preset audio feature, the demixing matrices, and the spatial characteristic matrix, to obtain the speaker identity and the speaker quantity. Compared with a conventional technology in which speaker diarization is performed by using only an audio feature, the solution in this embodiment of this application improves speaker diarization accuracy. In addition, in the multi-microphone-based speaker diarization technology in this application, speaker diarization can be performed by introducing the spatial characteristic matrix, without knowing arrangement information of the microphone array in advance, and a problem that diarization accuracy is reduced because the arrangement information changes due to component aging is resolved.

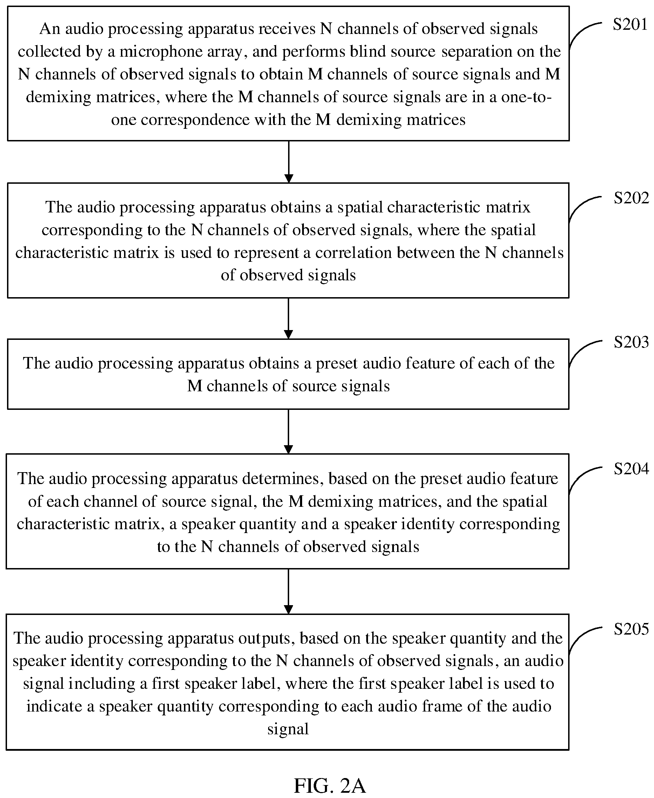

FIG. 2A is a schematic flowchart of another audio signal processing method according to an embodiment of this application. The method may include but is not limited to the following steps.

Step 201: An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices, N is an integer greater than or equal to 2, and M is an integer greater than or equal to 1.

The N channels of observed signals are audio signals collected by the microphone array within a time period.

During blind source separation, for example, if there are D source signals, it is usually assumed that there are also D observed signals, to determine that a hybrid matrix is a square matrix. In this case, the microphone array is referred to as a standard independent component analysis (ICA) model. An ICA model used when a quantity of source signals is different from a quantity of dimensions of the microphone array is referred to as a non-square ICA (non-square ICA) model. In this application, a standard ICA model, that is, N=M, is used as an example for detailed description.

Optionally, performing blind source separation on the N channels of observed signals by using a time domain method specifically includes the following steps: It is assumed that the N channels of observed signals are respectively $x_1$, $x_2$, ..., and $x_N$. An input signal $X=[x_1, x_2, ..., x_N]$ is formed by the N channels of observed signals. It is assumed that an output signal obtained after the BSS is Y, and $Y=[s_i, s_2, ..., s_M]$. It can be learned based on a BSS technology that $Y=XW$. W represents a matrix formed by the M demixing matrices. It is assumed that $W=[w_{11}, w_{12}, ... w_{1M}, w_{21}, w_{22}, ... w_{2M}, ..., w_{M1}, w_{M2}, ..., w_{MM}]$, w of every M columns form one demixing matrix, and each demixing matrix is used to separate the N channels of observed signals to obtain one source signal. A separation formula for separating the M channels of source signals from the N channels of observed signals based on the BSS is as follows:

$$y_p = \sum_{i=1}^{N} x_i \otimes w_{pi};$$

where p is an integer, $1 \leq p \leq M$, and $\otimes$ represents a convolution operation.

Optionally, when blind source separation is performed on the N channels of observed signals by using a frequency domain method, the foregoing separation formula is transformed to:

$$y_p^F = \sum_{i=1}^{N} x_i^F * w_{pi}^F ;$$

where $y_p^F$, $x_i^F$, and $w_{pi}^F$ represent an output signal, an input signal, and a demixing matrix in frequency domain, respectively.

Step 202: The audio processing apparatus obtains a spatial characteristic matrix corresponding to the N channels of observed signals, where the spatial characteristic matrix is used to represent a correlation between the N channels of observed signals.

Optionally, an implementation process of obtaining the spatial characteristic matrix corresponding to the N channels of observed signals may be: segmenting each of the N channels of observed signals into Q audio frames;

determining, based on N audio frames corresponding to each audio frame group, a spatial characteristic matrix corresponding to each first audio frame group, to obtain Q spatial characteristic matrices, where N audio frames corresponding to each first audio frame group are N audio frames of the N channels of observed signals in a same time window; and
obtaining the spatial characteristic matrix corresponding to the N channels of observed signals based on the Q spatial characteristic matrices, where

$$c^F(k, n) = \frac{X^F(k, n) * X^{FH}(k, n)}{\left\| X^F(k, n) * X^{FH}(k, n) \right\|} ,$$

where
$c^F(k, n)$ represents the spatial characteristic matrix corresponding to each first audio group, n represents frame sequence numbers of the Q audio frames, k represents a frequency index of an $n^{th}$ audio frame, $X^F(k, n)$ represents a column vector formed by a representation of a $k^{th}$ frequency of an $n^{th}$ audio frame of each channel of observed signal in frequency domain, $X^{FH}(k, n)$ represents a transposition of $X^F(k, n)$, n is an integer, $1 \leq n \leq Q$, and $\| X^F(k, n) * X^{FH}(k, n) \|$ represents a norm of $X^{FH}(k, n) * X^F(k, n)$.

A diagonal element in the spatial characteristic matrix represents energy of an observed signal collected by each microphone in the microphone array, and a non-diagonal element represents a correlation between observed signals collected by different microphones in the microphone array. For example, a diagonal element $C_{11}$ in the spatial characteristic matrix represents energy of an observed signal collected by the first microphone in the microphone array, and a non-diagonal element $C_{12}$ represents a correlation between observed signals collected by the first microphone and the second microphone in the microphone array. The correlation is caused because spatial positions of a speaker relative to the first microphone and the second microphone are different. Therefore, a spatial position of a speaker corresponding to each first audio frame group may be reflected by using a spatial characteristic matrix.

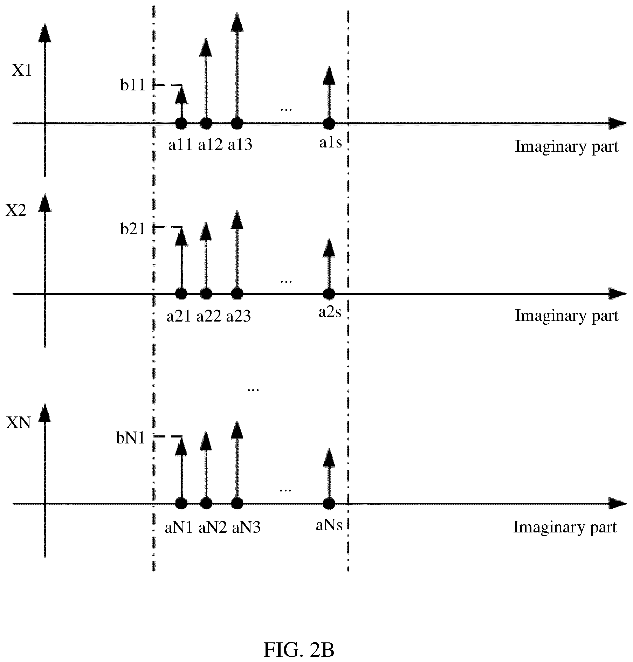

FIG. 2B is a schematic diagram of a representation of an audio frame of each of N channels of observed signals in any time window in frequency domain according to an embodiment of this application. Assuming that each audio frame corresponds to s frequencies, it can be seen from FIG. 2B that column vectors corresponding to all the first frequencies of the N channels of observed signals in the time window are $[a_{11}+b_{11}*j, a_{21}+b_{21}*j, ..., a_{N1}+b_{N1}*j]^T$. N audio frames corresponding to each time window are used as one first audio frame group. Because each channel of observed signal is segmented into Q audio frames, Q first audio frame groups can be obtained. A representation that is of another frequency shown in FIG. 2B in the time window and that is in frequency domain is obtained, to obtain $X^{FH}(k, n)$ corresponding to the first audio frame group in the time window:

$$X^{FH}(k,n) = \begin{bmatrix} a_{11} + b_{11} * j & a_{12} + b_{12} * j & \cdots & a_{1s} + b_{1s} * j \\ a_{21} + b_{21} * j & a_{22} + b_{22} * j & \cdots & a_{2s} + b_{2s} * j \\ \cdots & \cdots & \cdots & \cdots \\ a_{N1} + b_{N1} * j & a_{N2} + b_{N2} * j & \cdots & a_{Ns} + b_{Ns} * j \end{bmatrix}$$

Based on the foregoing method for calculating a spatial characteristic matrix, the spatial characteristic matrix corresponding to each first audio group is calculated, to obtain the Q spatial characteristic matrices, and the Q spatial characteristic matrices are spliced according to a time sequence of time windows corresponding to the Q spatial characteristic matrices, to obtain the spatial characteristic matrix corresponding to the N channels of observed signals.

Step 203: The audio processing apparatus obtains a preset audio feature of each of the M channels of source signals.

Optionally, the step of obtaining a preset audio feature of each of the M channels of source signals includes: segmenting each of the M channels of source signals into Q audio frames, and obtaining a preset audio feature of each audio frame of each channel of source signal.

The preset audio feature includes but is not limited to one or more of the following: a zero-crossing rate (ZCR), short-term energy, a fundamental frequency, and a mel-frequency cepstral coefficient (MFCC).

The following details a process of obtaining the zero-crossing rate (ZCR) and the short-term energy.

$$Z_n = \frac{1}{2} \sum_{m=1}^{N} \left| \mathrm{sgn}\left[ x_n(m) \right] - \mathrm{sgn}\left[ x_n(m-1) \right] \right|;$$

where $Z_n$ represents a zero-crossing rate corresponding to an $n^{th}$ audio frame of the Q audio frames, sgn[] represents a sign function, N represents a frame length of the $n^{th}$ audio frame, and n represents a frame index of an audio frame.

$$E_n = \sum_{m=1}^{N} x_n^2(m);$$

where $E_n$ represents short-term energy of the $n^{th}$ audio frame, and N represents the frame length of the $n^{th}$ audio frame.

Step 204: The audio processing apparatus determines, based on the preset audio feature of each channel of source signal, the M demixing matrices, and the spatial characteristic matrix, a speaker quantity and a speaker identity corresponding to the N channels of observed signals.

First, first clustering is performed based on the spatial characteristic matrix to obtain P initial clusters, where each initial cluster corresponds to one initial clustering center matrix, and the initial clustering center matrix is used to represent a spatial position of a speaker corresponding to each initial cluster, and P is an integer greater than or equal to 1. M similarities are determined, where the M similarities are similarities between the initial clustering center matrix corresponding to each initial cluster and the M demixing matrices. A source signal corresponding to each initial cluster is determined based on the M similarities. Second clustering is performed on a preset audio feature of the source signal corresponding to each initial cluster, to obtain the speaker quantity and/or the speaker identity corresponding to the N channels of observed signals.

Specifically, because a spatial characteristic matrix reflects a spatial position of a speaker, the spatial characteristic matrix corresponding to each first audio group is used as sample data, and Q pieces of sample data are obtained. First clustering is performed by using the Q pieces of sample data, and spatial characteristic matrices between which a distance is less than a preset threshold are combined into one cluster to obtain one initial cluster. Each initial cluster corresponds to one initial clustering center matrix, the initial clustering center matrix represents a spatial position of a speaker, and an initial clustering center is represented in a form of a spatial characteristic matrix. After the clustering is completed, the P initial clusters are obtained, and it is determined that the N channels of observed signals are generated when a speaker speaks at P spatial positions.

Clustering algorithms that may be used for first clustering and second clustering include but are not limited to the following several types of algorithms: an expectation maximization (English: expectation maximization, EM) clustering algorithm, a K-means clustering algorithm, and a hierarchical agglomerative clustering (English: hierarchical agglomerative clustering, HAC) algorithm.

In some possible implementations, because a demixing matrix represents a spatial position, the demixing matrix reflects a speaker quantity to some extent. Therefore, when the K-means algorithm is used to perform first clustering, a quantity of initial clusters is estimated based on a quantity of demixing matrices. To be specific, a value of k in the K-means algorithm is set to the quantity M of demixing matrices, and then clustering centers corresponding to M initial clusters are preset to perform first clustering. In this way, the quantity of initial clusters is estimated by using the quantity of demixing matrices, thereby reducing a quantity of iterations and increasing a clustering speed.

Optionally, the step of determining, based on the M similarities, a source signal corresponding to each initial cluster includes: determining a maximum similarity in the M similarities; determining, as a target demixing matrix, a demixing matrix that is in the M demixing matrices and that is corresponding to the maximum similarity; and determining a source signal corresponding to the target demixing matrix as the source signal corresponding to each initial cluster. By calculating the similarities between the initial clustering center and the demixing matrices, a source signal corresponding to each of the P spatial positions is determined, or in other words, the source signal corresponding to each initial cluster is determined.

Optionally, an implementation process of performing second clustering on the preset audio feature of the source signal corresponding to each initial cluster, to obtain the speaker quantity and/or the speaker identity corresponding to the N channels of observed signals may be: performing second clustering on the preset audio feature of the source signal corresponding to each initial cluster, to obtain H target clusters, where the H target clusters represent the speaker quantity corresponding to the N channels of observed signals, each target cluster corresponds to one target clustering center, each target clustering center includes one preset audio feature and at least one initial clustering center matrix, a preset audio feature corresponding to each target cluster is used to represent a speaker identity of a speaker corresponding to the target cluster, and at least one initial clustering center matrix corresponding to each target cluster is used to represent a spatial position of the speaker.

Optionally, an implementation process of performing second clustering on the preset audio feature of the source signal corresponding to each initial cluster, to obtain H target clusters may be: performing second clustering on the preset audio feature of the source signal corresponding to each initial cluster, to obtain at least one target cluster corresponding to each initial cluster; and obtaining the H target clusters based on the at least one target cluster corresponding to each initial cluster.

Specifically, an eigenvector formed by a preset audio feature of each audio frame of the source signal corresponding to each initial cluster is used as one piece of sample data to obtain several pieces of sample data corresponding to the source signal corresponding to each initial cluster; and clustering is performed on the several pieces of sample data to combine sample data corresponding to similar audio features into one cluster to obtain a target cluster corresponding to the initial cluster. If the source signal corresponding to each initial cluster is an audio signal corresponding to one speaker, after a plurality of clustering iterations are performed, the several pieces of sample data correspond to one target clustering center. The target clustering center is represented in a form of an eigenvector, and the target clustering center represents identity information (an audio feature) of the speaker. If the source signal corresponding to each initial cluster corresponds to a plurality of speakers, after a plurality of clustering iterations are performed, the several pieces of sample data corresponding to the source signal corresponding to the initial cluster correspond to a plurality of target clustering centers. Each target clustering center represents identity information of each speaker. Therefore, the source signal corresponding to the initial cluster is split into a plurality of target clusters. If speakers corresponding to a first channel of source signal and a second channel of source signal are a same speaker, after second clustering is performed, target clustering centers corresponding to the two channels of source signals are a same target clustering center or clustering centers corresponding to the two channels of source signals are similar. In this case, two initial clusters corresponding to the two channels of source signals are combined into one target cluster. Because second clustering is performed based on first clustering, a target clustering center obtained through second clustering further includes a spatial position of a speaker obtained through first clustering.

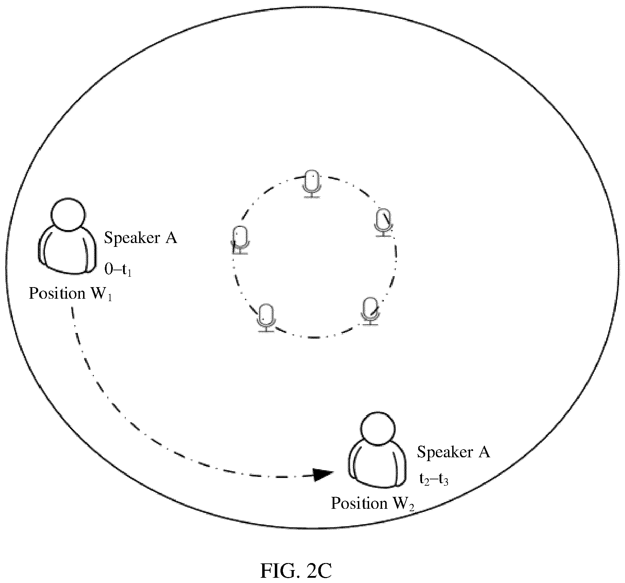

For example, as shown in FIG. 2C, because a demixing matrix represents spatial position information of a speaker, each channel of source signal is separated based on a spatial position of a speaker. When one speaker speaks at different positions, during first clustering, a plurality of channels of source signals corresponding to the speaker are separated from an observed signal, and correspond to different initial clusters. For example, the speaker speaks at a position $W_1$ in a time period $0\text{-}t_1$ and speaks at a position $W_2$ in a time period $t_2\text{-}t_3$, $t_3 > t_2 > t_1$, and it is determined that source signals corresponding to the speaker at $W_1$ and $W_2$ are $s_1$ and $s_2$, respectively. For example, $s_1$ corresponds to an initial cluster A, and $s_2$ corresponds to an initial cluster B. Because $s_1$ and $s_2$ correspond to a same speaker, and a preset audio feature in $0\text{-}ti$ is the same as that in $t_2\text{-}t_3$, after second clustering is performed, it may be determined that $s_1$ and $s_2$ correspond to a same target clustering center. Because $t_2 > t_1$, it may be determined that $s_2$ is an audio signal generated when the speaker walks to the position $W_2$. Therefore, the two initial clusters A and B may be combined into one target cluster. In this case, the target clustering center corresponding to the target cluster includes the spatial positions $W_1$ and $W_2$ obtained through first clustering and the preset audio feature of the speaker obtained through second clustering.

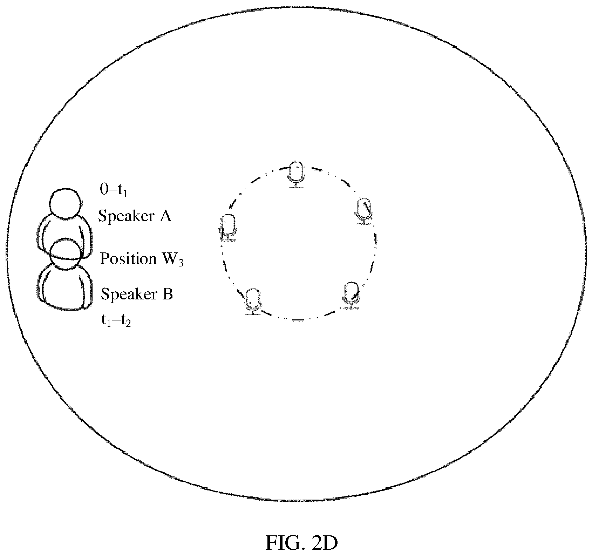

For another example, as shown in FIG. 2D, if a speaker A and a speaker B speak at a same position $W_3$, because the positions of the speakers are the same, a channel of source signal $s_3$ corresponding to the position $W_3$ is separated based on a demixing matrix, but the source signal $s_3$ includes audio signals corresponding to the speaker A and the speaker B. Generally, the speaker A and the speaker B cannot keep speaking at the same position at the same time. It is assumed that the speaker A speaks but the speaker B does not speak at the position $W_3$ in a time period 0-$t_1$, and that the speaker B speaks at the position $W_3$ in a time period $t_2$-$t_3$. Because speakers who speak in the two time periods are different, preset audio features corresponding to the two time periods are different. In this case, after second clustering is performed, the channel of source signal corresponds to two target clustering centers. A first target clustering center includes the position information $W_3$ obtained through first clustering and an audio feature corresponding to the speaker A obtained through second clustering. A second target clustering center includes the position information $W_3$ obtained through first clustering and an audio feature corresponding to the speaker B obtained through second clustering.

Optionally, before the performing second clustering on a preset audio feature of the source signal corresponding to each initial cluster, the method further includes: performing human voice analysis on each channel of source signal to remove a source signal that is in the M channels of source signals and that is generated by a non-human voice. An implementation process of performing human voice analysis on each channel of source signal may be: comparing a preset audio feature of each audio frame of each channel of source signal with an audio feature of a human voice, to determine whether each channel of source signal includes a human voice.

Step 205: The audio processing apparatus outputs, based on the speaker quantity and the speaker identity corresponding to the N channels of observed signals, an audio signal including a first speaker label, where the first speaker label is used to indicate a speaker quantity corresponding to each audio frame of the audio signal.

Optionally, a step of obtaining, based on the speaker quantity and the speaker identity corresponding to the N channels of observed signals, the output audio including the first speaker label includes: determining K distances, where the K distances are distances between the spatial characteristic matrix corresponding to each first audio frame group and the at least one initial clustering center matrix corresponding to each target cluster, each first audio frame group includes N audio frames of the N channels of observed signals in a same time window, and $K \geq H$; determining, based on the K distances, a speaker quantity corresponding to each first audio frame group, specifically including: determining L distances greater than a distance threshold in the H distances, and using L as the speaker quantity corresponding to the first audio frame group; then determining a time window corresponding to the first audio frame group, and marking a speaker quantity corresponding to an audio frame of the output audio in the time window as L; and finally sequentially determining speaker quantities corresponding to all the first audio frame groups, to obtain the first speaker label.

The distance threshold may be 80%, 90%, 95%, or another value.

Optionally, an audio frame of the output audio in each time window may include a plurality of channels of audio, or may be mixed audio of the plurality of channels of audio. For example, if a speaker A and a speaker B speak at the same time in 0-ti, and the speaker A and the speaker B are at different spatial positions, first speech audio corresponding to the speaker A in 0-$t_1$ is extracted from a source signal corresponding to the speaker A, and similarly, second speech audio corresponding to the speaker B in 0-$t_1$ is extracted from a source signal corresponding to the speaker B. In this case, the first speech audio and the second speech audio may be retained separately, or in other words, the output audio corresponds to two channels of speech audio in 0-ti; and in the output audio, a label indicates that two speakers speak at the same time in 0-$t_1$. Alternatively, the first speech audio and the second speech audio may be mixed, and in this case, the output audio corresponds to one channel of mixed audio in 0-ti, and in the output audio, a label indicates that two speakers speak at the same time in 0-ti.

It can be learned that, this embodiment of this application provides a speaker diarization method based on a multi-microphone system, the spatial characteristic matrix and the preset audio feature are introduced, and speaker diarization can be implemented through speaker determining by using the spatial characteristic matrix, the preset audio feature, and the demixing matrices, without knowing arrangement information of the microphone array in advance. In this way, a prior-art problem that diarization accuracy is reduced due to component aging is resolved. In addition, second clustering may be performed based on the audio feature to split one initial cluster corresponding to speakers at angles close to each other into two target clusters and combine two initial clusters generated because a speaker moves into one target cluster. This resolves a prior-art problem of low diarization accuracy.

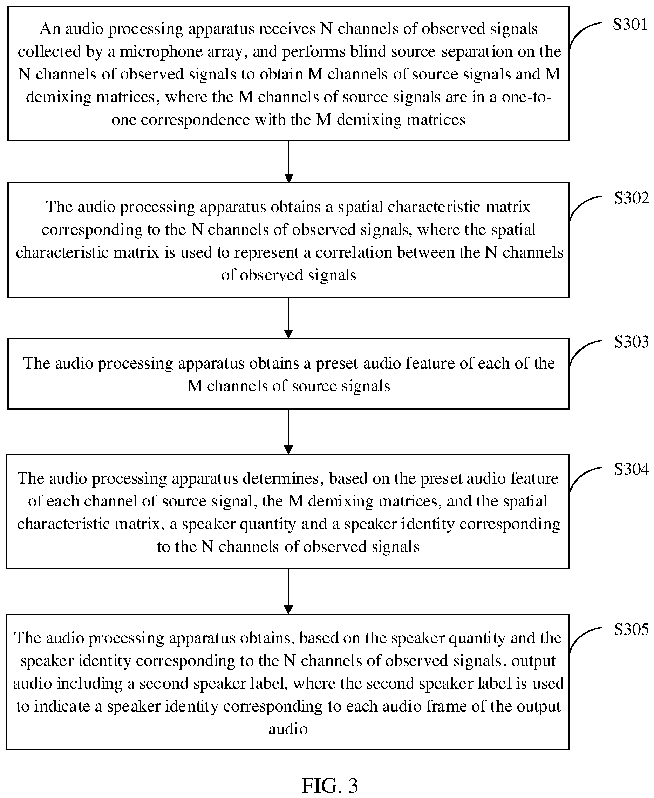

FIG. 3 is a schematic flowchart of an audio signal processing method according to an embodiment of this application. The method may include but is not limited to the following steps.

Step 301: An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices, and both M and N are integers greater than or equal to 1.

Step 302: The audio processing apparatus obtains a spatial characteristic matrix corresponding to the N channels of observed signals, where the spatial characteristic matrix is used to represent a correlation between the N channels of observed signals.

Step 303: The audio processing apparatus obtains a preset audio feature of each of the M channels of source signals.

Step 304: The audio processing apparatus determines, based on the preset audio feature of each channel of source signal, the M demixing matrices, and the spatial characteristic matrix, a speaker quantity and a speaker identity corresponding to the N channels of observed signals.

Step 305: The audio processing apparatus obtains, based on the speaker quantity and the speaker identity corresponding to the N channels of observed signals, output audio including a second speaker label, where the second speaker label is used to indicate a speaker identity corresponding to each audio frame of the output audio.

Optionally, the step of obtaining, based on the speaker quantity and the speaker identity corresponding to the N channels of observed signals, output audio including a second speaker label includes: determining K distances, where the K distances are distances between a spatial characteristic matrix corresponding to each first audio frame group and at least one initial clustering center matrix corresponding to each target cluster, each first audio frame group includes N audio frames of the N channels of observed signals in a same time window, and $K \geq H$; determining, based on the K distances, a speaker identity corresponding to each first audio frame group, specifically including: determining L distances greater than a distance threshold in the H distances (where $L \leq H$), obtaining L target clusters corresponding to the L distances, and using the L target clusters as the speaker identity corresponding to the first audio frame group; then determining a time window corresponding to the first audio frame group, and determining that a speaker corresponding to the M channels of source signals in the time window is the L target clusters; and finally sequentially determining speaker quantities corresponding to all the audio frame groups, specifically including: determining a speaker quantity corresponding to the M channels of source signals in each time window, forming the output audio by using audio frames of the M channels of source signals in all the time windows, and determining the second speaker label based on a speaker identity corresponding to each time window, where the second speaker label is used to indicate the speaker identity corresponding to the output audio in each time window.

The distance threshold may be 80%, 90%, 95%, or another value.

Optionally, the audio frame of the output audio in each time window may include a plurality of channels of audio, or may be mixed audio of the plurality of channels of audio. For example, if a speaker A and a speaker B speak at the same time in 0-ti, and the speaker A and the speaker B are at different spatial positions, first speech audio corresponding to the speaker A in $0\text{-}t_1$ is extracted from a source signal corresponding to the speaker A, and similarly, second speech audio corresponding to the speaker B in $0\text{-}t_1$ is extracted from a source signal corresponding to the speaker B. In this case, the first speech audio and the second speech audio may be retained separately, or in other words, the output audio corresponds to two channels of speech audio in $0\text{-}t_1$; and in the output audio, the second speaker label is used to indicate that the speaker A and the speaker B speak at the same time in 0-ti. Alternatively, the first speech audio and the second speech audio may be mixed, and in this case, the output audio corresponds to one channel of mixed audio in 0-ti, and in the output audio, the second speaker label is used to indicate that the speaker A and the speaker B speak at the same time in 0-ti.

It can be learned that, this embodiment of this application provides a speaker diarization method based on a multi-microphone system, the spatial characteristic matrix and the preset audio feature are introduced, and speaker diarization can be implemented through speaker determining by using the spatial characteristic matrix, the preset audio feature, and the demixing matrices, without knowing arrangement information of the microphone array in advance. In this way, a prior-art problem that diarization accuracy is reduced due to component aging is resolved. In addition, second clustering may be performed based on the audio feature to split one initial cluster corresponding to speakers at angles close to each other into two target clusters and combine two initial clusters generated because a speaker moves into one target cluster. This resolves a prior-art problem of low diarization accuracy.

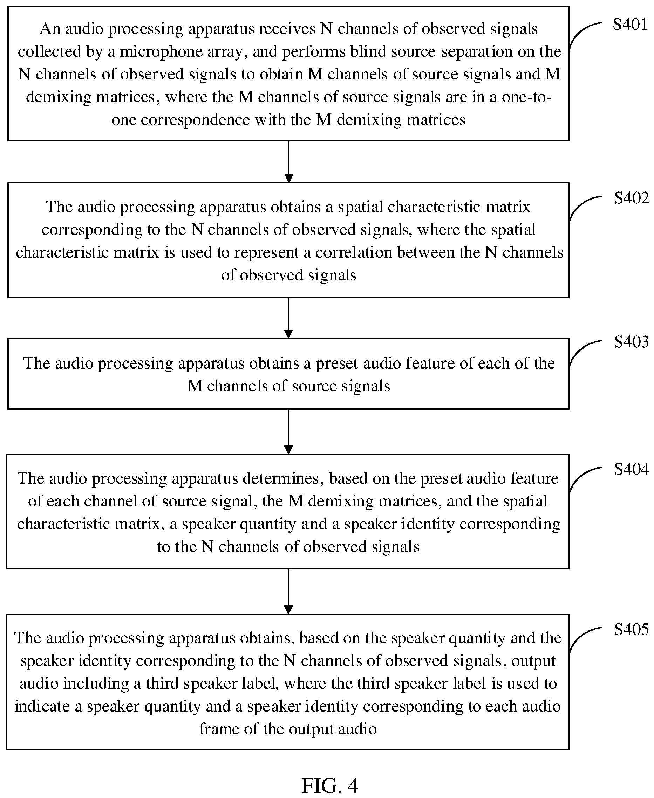

FIG. 4 is a schematic flowchart of an audio signal processing method according to an embodiment of this application. The method may include but is not limited to the following steps.

Step 401: An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices, and both M and N are integers greater than or equal to 1.

Step 402: The audio processing apparatus obtains a spatial characteristic matrix corresponding to the N channels of observed signals, where the spatial characteristic matrix is used to represent a correlation between the N channels of observed signals.

Step 403: The audio processing apparatus obtains a preset audio feature of each of the M channels of source signals.

Step 404: The audio processing apparatus determines, based on the preset audio feature of each channel of source signal, the M demixing matrices, and the spatial characteristic matrix, a speaker quantity and a speaker identity corresponding to the N channels of observed signals.

Step 405: The audio processing apparatus obtains, based on the speaker quantity and the speaker identity corresponding to the N channels of observed signals, output audio including a third speaker label, where the third speaker label is used to indicate a speaker quantity and a speaker identity corresponding to each audio frame of the output audio.

Optionally, the step of obtaining, based on the speaker quantity and the speaker identity corresponding to the N channels of observed signals, output audio including a third speaker label includes: determining K distances, where the K distances are distances between a spatial characteristic matrix corresponding to each first audio frame group and at least one initial clustering center matrix corresponding to each target cluster, each first audio frame group includes N audio frames of the N channels of observed signals in a same time window, and $K \geq H$; determining, based on the K distances, a speaker identity corresponding to each first audio frame group, specifically including: determining L distances greater than a distance threshold in the H distances (where $L \leq H$), obtaining L target clusters corresponding to the L distances, and using the L target clusters as the speaker identity corresponding to the first audio frame group; then determining a time window corresponding to the first audio frame group, and determining that a speaker corresponding to the M channels of source signals in the time window is the L target clusters; extracting, from the M channels of source signals, L audio frames corresponding to each first audio frame group, where a time window corresponding to the L audio frames is the same as a time window corresponding to the first audio frame group; determining L similarities, where the L similarities are similarities between a preset audio feature of each of the L audio frames and preset audio features corresponding to the L target clusters; determining, based on the L similarities, a target cluster corresponding to each of the L audio frames, specifically including: using a target cluster corresponding to a maximum similarity in the L similarities as the target cluster corresponding to each audio frame, and then determining a speaker quantity corresponding to the time window and a source audio frame corresponding to each speaker; and finally obtaining, based on the target cluster corresponding to each audio frame, the output audio including the third speaker label. A speaker quantity corresponding to each time window is first determined by performing comparison based on spatial characteristic matrices, and then a speaker corresponding to each source audio frame is determined by performing comparison based on audio features of speakers, thereby improving speaker diarization accuracy.

The distance threshold may be 80%, 90%, 95%, or another value.

For example, if a speaker A and a speaker B speak at the same time in 0-ti, and the speaker A and the speaker B are at different spatial positions, a corresponding target cluster A and target cluster B in 0-ti are determined by using a spatial characteristic matrix corresponding to a first audio group, and then two channels of source audio frames are extracted from the M channels of source signals in 0-ti. However, which source audio frame corresponds to the speaker A and which source audio frame corresponds to the speaker B cannot be determined. Therefore, a preset audio feature of each of the two channels of source audio frames is compared with a preset audio feature corresponding to the target cluster A, to obtain a similarity. In this way, two similarities are obtained. A target cluster corresponding to the larger of the similarities is used as a speaker corresponding to each channel of source audio frame.

Optionally, the step of obtaining, based on the speaker quantity and the speaker identity corresponding to the N channels of observed signals, output audio including a third speaker label includes: determining H similarities, where the H similarities are similarities between a preset audio feature of each audio frame in each second audio frame group and preset audio features of the H target clusters, and each second audio frame group includes audio frames of the M channels of source signals in a same time window; determining, based on the H similarities, a target cluster corresponding to each audio frame in each second audio frame group; and obtaining, based on the target cluster corresponding to each audio frame, the output audio including the speaker label, where the speaker label is used to indicate a speaker quantity and/or a speaker identity corresponding to each audio frame of the output audio. Audio features are used to directly compare speakers, thereby increasing a speaker diarization speed.

For example, if a speaker A and a speaker B speak at the same time in 0-ti, and the speaker A and the speaker B are at different spatial positions, two channels of corresponding source audio frames in 0-ti may be extracted from the M channels of source signals. However, which source audio frame corresponds to the speaker A and which source audio frame corresponds to the speaker B cannot be determined. Then, a preset audio feature of each of the two channels of source audio frames is directly compared with the H target clusters obtained after second clustering, and a target cluster corresponding to a largest similarity is used as a speaker corresponding to each channel of source audio frame.

Optionally, an audio frame of the output audio in each time window may include a plurality of channels of audio, or may be mixed audio of the plurality of channels of audio. For example, if a speaker A and a speaker B speak at the same time in $0-t_1$, and the speaker A and the speaker B are at different spatial positions, first speech audio corresponding to the speaker A in $0-t_1$ is extracted from a source signal corresponding to the speaker A, and similarly, second speech audio corresponding to the speaker B in $0-t_1$ is extracted from a source signal corresponding to the speaker B. In this case, the first speech audio and the second speech audio may be retained separately, or in other words, the output audio corresponds to two channels of speech audio in $0-t_1$; and in the output audio, the third speaker label is used to indicate that the speaker A and the speaker B speak at the same time in 0-ti. Certainly, because a speaker corresponding to each channel of source audio frame is determined, when the audio corresponding to the speaker A and the speaker B is not mixed, a separate play button may be set. When a play button corresponding to the speaker A is clicked, the speech audio corresponding to the speaker A may be played separately. Alternatively, the first speech audio and the second speech audio may be mixed, and in this case, the output audio corresponds to one channel of mixed audio in 0-ti, and in the output audio, the second speaker label is used to indicate that the speaker A and the speaker B speak at the same time in 0-ti.

It can be learned that, this embodiment of this application provides a speaker diarization method based on a multi-microphone system, the spatial characteristic matrix and the preset audio feature are introduced, and speaker diarization can be implemented through speaker determining by using the spatial characteristic matrix, the preset audio feature, and the demixing matrices, without knowing arrangement information of the microphone array in advance. In this way, a prior-art problem that diarization accuracy is reduced due to component aging is resolved. In addition, second clustering may be performed based on the audio feature to split one initial cluster corresponding to speakers at angles close to each other into two target clusters and combine two initial clusters generated because a speaker moves into one target cluster. This resolves a prior-art problem of low diarization accuracy.

In some possible implementations, if the N channels of observed signals are audio signals obtained within a first preset time period, H clustering centers corresponding to the H target clusters corresponding to the N channels of observed signals are used in a next time window, and the H clustering centers are used as initial cluster values of observed signals obtained within a second preset time. In this way, parameter sharing is implemented within the two time periods, thereby increasing a clustering speed and improving speaker diarization efficiency.

In some possible implementations, based on the speaker diarization methods shown in FIG. 2A, FIG. 3, and FIG. 4, the output audio and the speaker label may be presented in an interface of an audio processing apparatus in the following several forms.

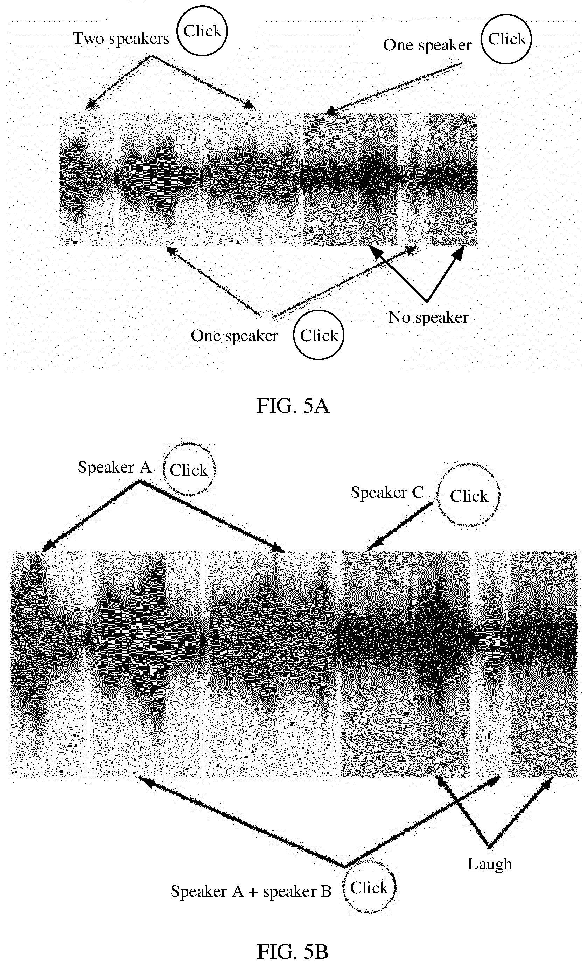

Optionally, FIG. 5A is a schematic diagram of displaying output audio in an interface according to an embodiment of this application. A display manner shown in FIG. 5A corresponds to the speaker diarization method in FIG. 2A. As shown in FIG. 5A, a first speaker label is added to each audio frame of output audio, and the first speaker label is used to indicate a speaker quantity corresponding to a time window. It can be understood that, if the output audio retains audio generated when each speaker speaks separately, or in other words, audio corresponding to speakers is not mixed for output, when the output audio corresponds to a plurality of speakers in a time window, independent audio signals corresponding to all the speakers in the time window may be successively played by clicking a "click" button next to the label. Certainly, during addition of the first speaker label, the first speaker label does not need to be added to the output audio, and the first speaker label and the output audio may be output in an associated manner. The first speaker label indicates a speaker quantity corresponding to each audio frame of the output audio, and the speaker quantity corresponding to each audio frame of the output audio may be determined by reading the first speaker label.

Optionally, FIG. 5B is another schematic diagram of displaying output audio in an interface according to an embodiment of this application. A display manner shown in FIG. 5B corresponds to the speaker diarization method in FIG. 3. During determining of a speaker identity corresponding to each audio frame of output audio, a second speaker label is added to an output audio frame to indicate a speaker identity corresponding to each time window. As shown in FIG. 5B, the second speaker label indicates that a speaker corresponding to the first audio frame and the third audio frame is a speaker A. It can be understood that, if the output audio retains audio generated when each speaker speaks separately, or in other words, audio corresponding to speakers is not mixed for output, when the output audio corresponds to a plurality of speakers in a time window, the audio corresponding to all the speakers is successively played by clicking a "click" button next to the label. However, a specific speaker to which an audio frame played each time belongs cannot be determined. Certainly, during addition of the second speaker label, the second speaker label does not need to be added to the output audio, and the second speaker label and the output audio may be output in an associated manner. The first speaker label indicates a speaker quantity corresponding to each audio frame of the output audio, and the speaker identity corresponding to each audio frame of the output audio may be determined by reading the second speaker label.

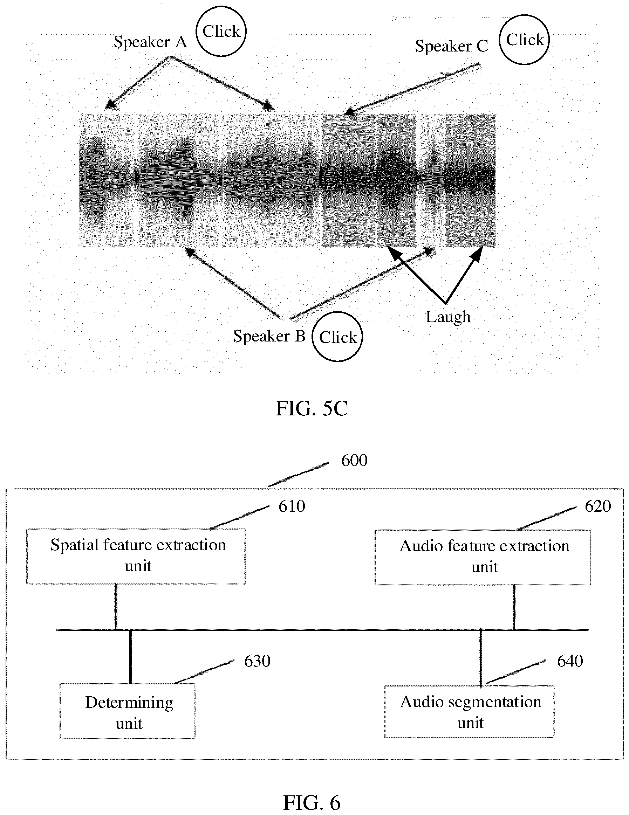

Optionally, FIG. 5C is another schematic diagram of displaying output audio in an interface according to an embodiment of this application. A display manner shown in FIG. 5C is corresponding to the speaker diarization method in FIG. 4. After a speaker quantity and a speaker identity corresponding to each audio frame of the output audio are determined, a third speaker label is added to the output audio to indicate a speaker quantity and a speaker identity corresponding to each time window. In addition, audio corresponding to speakers is not mixed in the output audio for output. When the output audio corresponds to a plurality of speakers in a time window, an identity of each speaker and a source signal corresponding to the speaker in the time window may be determined. All audio frames that are of the output audio and that are corresponding to each speaker can be determined by analyzing all the time windows of the output audio. Audio generated when each speaker speaks can be separately played by clicking a "click" button corresponding to each speaker, facilitating generation of a conference record. Certainly, during addition of the third speaker label, the third speaker label does not need to be added to the output audio, and the third speaker label and the output audio may be output in an associated manner. The speaker quantity and the speaker identity corresponding to the output audio in each time window are determined by reading the first speaker label.

Refer to FIG. 6. An embodiment of this application provides an audio processing apparatus 600. The apparatus 600 may include:

an audio separation unit 610, configured to: receive N channels of observed signals collected by a microphone array, and perform blind source separation on the N channels of observed signals to obtain M channels of source signals and M demixing matrices, where the M channels of source signals are in a one-to-one correspondence with the M demixing matrices, N is an integer greater than or equal to 2, and M is an integer greater than or equal to 1; a spatial feature extraction unit 620, configured to obtain a spatial characteristic matrix corresponding to the N channels of observed signals, where the spatial characteristic matrix is used to represent a correlation between the N channels of observed signals;
an audio feature extraction unit 630, configured to obtain a preset audio feature of each of the M channels of source signals; and
a determining unit 640, configured to determine, based on the preset audio feature of each channel of source signal, the M demixing matrices, and the spatial characteristic matrix, a speaker quantity and a speaker identity corresponding to the N channels of observed signals.

It can be learned that, the solution in this embodiment of this application is a speaker diarization technology based on a multi-microphone system, the spatial characteristic matrix and the preset audio feature are introduced, and speaker diarization can be implemented through speaker clustering by using the spatial characteristic matrix, the preset audio feature, and the demixing matrices, without knowing arrangement information of the microphone array in advance. In this way, a prior-art problem that diarization accuracy is reduced due to component aging is resolved. In addition, scenarios in which angles of speakers are close to each other and a speaker moves can be recognized due to the introduction of the audio feature, thereby further improving speaker diarization accuracy.

In some possible implementations, when obtaining the preset audio feature of each of the M channels of source signals, the audio feature extraction unit 630 is specifically configured to: segment each of the M channels of source signals into Q audio frames, where Q is an integer greater than 1; and obtain a preset audio feature of each audio frame of each channel of source signal.

In some possible implementations, when obtaining the spatial characteristic matrix corresponding to the N channels of observed signals, the spatial feature extraction unit 620 is specifically configured to: segment each of the N channels of observed signals into Q audio frames; determine, based on N audio frames corresponding to each audio frame group, a spatial characteristic matrix corresponding to each first audio frame group, to obtain Q spatial characteristic matrices, where N audio frames corresponding to each first audio frame group are N audio frames of the N channels of observed signals in a same time window; and obtain the spatial characteristic matrix corresponding to the N channels of observed signals based on the Q spatial characteristic matrices, where

$$ c^F(k,n) = \frac{X^F(k,n) * X^{FH}(k,n)}{\left\| X^F(k,n) * X^{FH}(k,n) \right\|}, $$

where
$c^F(k,n)$ represents the spatial characteristic matrix corresponding to each first audio group, n represents frame sequence numbers of the Q audio frames, k represents a frequency index of an $n^{th}$ audio frame, $X^F(k,n)$ represents a column vector formed by a representation of a $k^{th}$ frequency of an $n^{th}$ audio frame of each channel of observed signal in frequency domain, $X^{FH}(k,n)$ represents a transposition of $X^F(k,n)$, n is an integer, and $1 \leq n \leq Q$.

In some possible implementations, when determining, based on the preset audio feature of each channel of source signal, the M demixing matrices, and the spatial characteristic matrix, the speaker quantity and the speaker identity corresponding to the N channels of observed signals, the determining unit 640 is specifically configured to: perform first clustering on the spatial characteristic matrix to obtain P initial clusters, where each initial cluster corresponds to one initial clustering center matrix, and the initial clustering center matrix is used to represent a spatial position of a speaker corresponding to each initial cluster, and P is an integer greater than or equal to 1; determine M similarities, where the M similarities are similarities between the initial clustering center matrix corresponding to each initial cluster and the M demixing matrices; determine, based on the M similarities, a source signal corresponding to each initial cluster; and perform second clustering on a preset audio feature of the source signal corresponding to each initial cluster, to obtain the speaker quantity and the speaker identity corresponding to the N channels of observed signals.

In some possible implementations, when determining, based on the M similarities, the source signal corresponding to each initial cluster, the determining unit is specifically configured to: determine a maximum similarity in the M similarities; determine, as a target demixing matrix, a demixing matrix that is in the M demixing matrices and that is corresponding to the maximum similarity; and determine a source signal corresponding to the target demixing matrix as the source signal corresponding to each initial cluster.

In some possible implementations, when performing second clustering on the preset audio feature of the source signal corresponding to each initial cluster, to obtain the speaker quantity and the speaker identity corresponding to the N channels of observed signals, the determining unit 640 is specifically configured to: perform second clustering on the preset audio feature of the source signal corresponding to each initial cluster, to obtain H target clusters, where the H target clusters represent the speaker quantity corresponding to the N channels of observed signals, each target cluster corresponds to one target clustering center, each target clustering center includes one preset audio feature and at least one initial clustering center matrix, a preset audio feature corresponding to each target cluster is used to represent a speaker identity of a speaker corresponding to the target cluster, and at least one initial clustering center matrix corresponding to each target cluster is used to represent a spatial position of the speaker.

In some possible implementations, the audio processing apparatus 100 further includes an audio segmentation unit 650, where

the audio segmentation unit 650 is configured to obtain, based on the speaker quantity and the speaker identity corresponding to the N channels of observed signals, output audio including a speaker label.

In some possible implementations, when obtaining, based on the speaker quantity and the speaker identity corresponding to the N channels of observed signals, the output audio including the speaker label, the audio segmentation unit 650 is specifically configured to: determine K distances, where the K distances are distances between the spatial characteristic matrix corresponding to each first audio frame group and the at least one initial clustering center matrix corresponding to each target cluster, each first audio frame group includes N audio frames of the N channels of observed signals in a same time window, and K≥H; determine, based on the K distances, L target clusters corresponding to each first audio frame group, where L≤H; extract, from the M channels of source signals, L audio frames corresponding to each first audio frame group, where a time window corresponding to the L audio frames is the same as a time window corresponding to the first audio frame group; determine L similarities, where the L similarities are similarities between a preset audio feature of each of the L audio frames and preset audio features corresponding to the L target clusters; determine, based on the L similarities, a target cluster corresponding to each of the L audio frames; and obtain, based on the target cluster corresponding to each audio frame, the output audio including the speaker label, where the speaker label is used to indicate a speaker quantity and/or a speaker identity corresponding to each audio frame of the output audio.

In some possible implementations, when obtaining, based on the speaker quantity and the speaker identity corresponding to the N channels of observed signals, the output audio including the speaker label, the audio segmentation unit 650 is specifically configured to: determine H similarities, where the H similarities are similarities between a preset audio feature of each audio frame in each second audio frame group and preset audio features of the H target clusters, and each second audio frame group includes audio frames of the M channels of source signals in a same time window; determine, based on the H similarities, a target cluster corresponding to each audio frame in each second audio frame group; and obtain, based on the target cluster corresponding to each audio frame, the output audio including the speaker label, where the speaker label is used to indicate a speaker quantity and/or a speaker identity corresponding to each audio frame of the output audio.

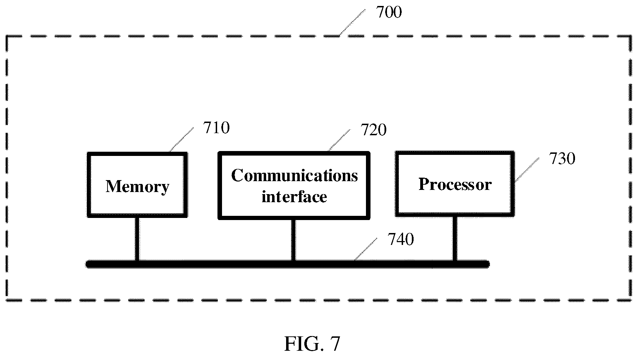

Refer to FIG. 7. An embodiment of this application provides an audio processing apparatus 700. The apparatus 700 includes:

a processor 730, a communications interface 720, and a memory 710 that are coupled to each other. For example, the processor 730, the communications interface 720, and the memory 710 are coupled to each other by using a bus 740.

The memory 710 may include but is not limited to a random access memory (random access memory, RAM), an erasable programmable read-only memory (erasable programmable ROM, EPROM), a read-only memory (read-only memory, ROM), a compact disc read-only memory (compact disc read-only memory, CD-ROM), and the like. The memory 810 is configured to store related instructions and data.

The processor 730 may be one or more central processing units (central processing units, CPUs). When the processor 730 is one CPU, the CPU may be a single-core CPU, or may be a multi-core CPU.

The processor 730 is configured to: read program code stored in the memory 710, and cooperate with the communications interface 740 in performing some or all of the steps of the methods performed by the audio processing apparatus in the foregoing embodiments of this application.

For example, the communications interface 720 is configured to receive N channels of observed signals collected by a microphone array, where N is an integer greater than or equal to 2.

The processor 730 is configured to: perform blind source separation on the N channels of observed signals to obtain M channels of source signals and M demixing matrices, where the M channels of source signals are in a one-to-one correspondence with the M demixing matrices, and M is an integer greater than or equal to 1; obtain a spatial characteristic matrix corresponding to the N channels of observed signals, where the spatial characteristic matrix is used to represent a correlation between the N channels of observed signals; obtain a preset audio feature of each of the M channels of source signals; and determine, based on the preset audio feature of each channel of source signal, the M demixing matrices, and the spatial characteristic matrix, a speaker quantity and a speaker identity corresponding to the N channels of observed signals.

It can be learned that, the solution in this embodiment of this application is a speaker diarization technology based on a multi-microphone system, the spatial characteristic matrix and the preset audio feature are introduced, and speaker diarization can be implemented through speaker clustering by using the spatial characteristic matrix, the preset audio feature, and the demixing matrices, without knowing arrangement information of the microphone array in advance. In this way, a prior-art problem that diarization accuracy is reduced due to component aging is resolved. In addition, scenarios in which angles of speakers are close to each other and a speaker moves can be recognized due to the introduction of the audio feature, thereby further improving speaker diarization accuracy.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing embodiments, the descriptions of the embodiments are emphasized differently. For a part that is not detailed in an embodiment, reference may be made to related descriptions of other embodiments.

An embodiment of this application further provides a computer-readable storage medium. The computer-readable storage medium stores a computer program, and the computer program is executed by related hardware to perform any audio signal processing method provided in the embodiments of this application. In addition, an embodiment of this application further provides a computer-readable storage medium. The computer-readable storage medium stores a computer program, and the computer program is executed by related hardware to perform any method provided in the embodiments of this application.

An embodiment of this application further provides a computer program product. When the computer program product runs on a computer, the computer is enabled to perform any audio signal processing method provided in the embodiments of this application. In addition, an embodiment of this application further provides a computer program product. When the computer program product runs on a computer, the computer is enabled to perform any method provided in the embodiments of this application.

In the foregoing embodiments, the descriptions of the embodiments are emphasized differently. For a part that is not detailed in an embodiment, reference may be made to related descriptions of other embodiments.

In several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual indirect couplings or direct couplings or communication connections may be implemented by using some interfaces. The indirect couplings or communication connections between the apparatuses or units may be implemented in electrical or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

If the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium may include, for example, any medium that can store program code, such as a USB flash drive, a removable hard disk, a read-only memory (read-only memory, ROM), a random access memory (random access memory, RAM), a magnetic disk, or an optical disc.

**Claims**

1. An audio signal processing method, comprising:

receiving N channels of observed signals collected by a microphone array, and performing blind source separation on the N channels of observed signals to obtain M channels of source signals and M demixing matrices, wherein the M channels of source signals are in a one-to-one correspondence with the M demixing matrices, N is an integer greater than or equal to 2, and M is an integer greater than or equal to 1;
obtaining a spatial characteristic matrix corresponding to the N channels of observed signals, wherein the spatial characteristic matrix is used to represent a correlation between the N channels of observed signals;
obtaining a preset audio feature of each of the M channels of source signals;
the method being **characterized by**
determining, based on the preset audio feature of each channel of source signal, the M demixing matrices, and the spatial characteristic matrix, a speaker quantity and a speaker identity corresponding to the N channels of observed signals.

2. The method according to claim 1, wherein the obtaining a preset audio feature of each of the M channels of source signals comprises:

segmenting each of the M channels of source signals into Q audio frames, wherein Q is an integer greater than 1; and
obtaining a preset audio feature of each audio frame of each channel of source signal.

3. The method according to claim 1 or 2, wherein the obtaining a spatial characteristic matrix corresponding to the N channels of observed signals comprises:

segmenting each of the N channels of observed signals into Q audio frames;
determining, based on N audio frames corresponding to each audio frame group, a spatial characteristic matrix corresponding to each first audio frame group, to obtain Q spatial characteristic matrices, wherein N audio frames corresponding to each first audio frame group are N audio frames of the N channels of observed signals in a same time window; and
obtaining the spatial characteristic matrix corresponding to the N channels of observed signals based on the Q spatial characteristic matrices, wherein

$$c^{F}(k,n) = \frac{X^{F}(k,n) * X^{FH}(k,n)}{\left\| X^{F}(k,n) * X^{FH}(k,n) \right\|},$$

wherein
$c^{F}(k, n)$ represents the spatial characteristic matrix corresponding to each first audio frame group, n represents frame sequence numbers of the Q audio frames, k represents a frequency index of an $n^{th}$ audio frame, $X^{F}(k, n)$ represents a column vector formed by a representation of a $k^{th}$ frequency of an $n^{th}$ audio frame of each channel of observed signal in frequency domain, $X^{FH}(k,n)$ represents a transposition of $X^{F}(k,n)$, n is an integer, and $1 \leq n \leq Q$.

4. The method according to any one of claims 1 to 3, wherein the determining, based on the preset audio feature of each channel of source signal, the M demixing matrices, and the spatial characteristic matrix, a speaker quantity and a speaker identity corresponding to the N channels of observed signals comprises:

performing first clustering on the spatial characteristic matrix to obtain P initial clusters, wherein each initial cluster corresponds to one initial clustering center matrix, and the initial clustering center matrix is used to represent a spatial position of a speaker corresponding to each initial cluster, and P is an integer greater than or equal to 1;

determining M similarities, wherein the M similarities are similarities between the initial clustering center matrix corresponding to each initial cluster and the M demixing matrices;
determining, based on the M similarities, a source signal corresponding to each initial cluster; and
performing second clustering on a preset audio feature of the source signal corresponding to each initial cluster, to obtain the speaker quantity and the speaker identity corresponding to the N channels of observed signals.

5. The method according to claim 4, wherein the determining, based on the M similarities, a source signal corresponding to each initial cluster comprises:

determining a maximum similarity in the M similarities;
determining, as a target demixing matrix, a demixing matrix that is in the M demixing matrices and that is corresponding to the maximum similarity; and
determining a source signal corresponding to the target demixing matrix as the source signal corresponding to each initial cluster.

6. The method according to claim 4 or 5, wherein the performing second clustering on a preset audio feature of the source signal corresponding to each initial cluster, to obtain the speaker quantity and the speaker identity corresponding to the N channels of observed signals comprises:

performing second clustering on the preset audio feature of the source signal corresponding to each initial cluster, to obtain H target clusters, wherein the H target clusters represent the speaker quantity corresponding to the N channels of observed signals, each target cluster corresponds to one target clustering center, each target clustering center comprises one preset audio feature and at least one initial clustering center matrix, a preset audio feature corresponding to each target cluster is used to represent a speaker identity of a speaker corresponding to the target cluster, and at least one initial clustering center matrix corresponding to each target cluster is used to represent a spatial position of the speaker.

7. The method according to claim 6, wherein the method further comprises:
obtaining, based on the speaker quantity and the speaker identity corresponding to the N channels of observed signals, output audio comprising a speaker label.

8. The method according to claim 7, wherein the obtaining, based on the speaker quantity and the speaker identity corresponding to the N channels of observed signals, output audio comprising a speaker label comprises:

determining K distances, wherein the K distances are distances between the spatial characteristic matrix corresponding to each first audio frame group and the at least one initial clustering center matrix corresponding to each target cluster, each first audio frame group comprises N audio frames of the N channels of observed signals in a same time window, and $K \geq H$;
determining, based on the K distances, L target clusters corresponding to each first audio frame group, wherein $L \leq H$;
extracting, from the M channels of source signals, L audio frames corresponding to each first audio frame group, wherein a time window corresponding to the L audio frames is the same as a time window corresponding to the first audio frame group;
determining L similarities, wherein the L similarities are similarities between a preset audio feature of each of the L audio frames and preset audio features corresponding to the L target clusters;
determining, based on the L similarities, a target cluster corresponding to each of the L audio frames; and
obtaining, based on the target cluster corresponding to each audio frame, the output audio comprising the speaker label, wherein the speaker label is used to indicate a speaker quantity and/or a speaker identity corresponding to each audio frame of the output audio.

9. The method according to claim 7, wherein the obtaining, based on the speaker quantity and the speaker identity corresponding to the N channels of observed signals, output audio comprising a speaker label comprises:

determining H similarities, wherein the H similarities are similarities between a preset audio feature of each audio frame in each second audio frame group and preset audio features of the H target clusters, and each second audio frame group comprises audio frames of the M channels of source signals in a same time window;
determining, based on the H similarities, a target cluster corresponding to each audio frame in each second audio frame group; and

obtaining, based on the target cluster corresponding to each audio frame, the output audio comprising the speaker label, wherein the speaker label is used to indicate a speaker quantity and/or a speaker identity corresponding to each audio frame of the output audio.

10. An audio processing apparatus, comprising:

an audio separation unit, configured to: receive N channels of observed signals collected by a microphone array, and perform blind source separation on the N channels of observed signals to obtain M channels of source signals and M demixing matrices, wherein the M channels of source signals are in a one-to-one correspondence with the M demixing matrices, N is an integer greater than or equal to 2, and M is an integer greater than or equal to 1;
a spatial feature extraction unit, configured to obtain a spatial characteristic matrix corresponding to the N channels of observed signals, wherein the spatial characteristic matrix is used to represent a correlation between the N channels of observed signals;
an audio feature extraction unit, configured to obtain a preset audio feature of each of the M channels of source signals;
the audio processing apparatus being **characterized by** further comprising
a determining unit, configured to determine, based on the preset audio feature of each channel of source signal, the M demixing matrices, and the spatial characteristic matrix, a speaker quantity and a speaker identity corresponding to the N channels of observed signals.

11. The apparatus according to claim 10, wherein
when obtaining the preset audio feature of each of the M channels of source signals, the audio feature extraction unit is specifically configured to: segment each of the M channels of source signals into Q audio frames, wherein Q is an integer greater than 1; and obtain a preset audio feature of each audio frame of each channel of source signal.

12. The apparatus according to claim 10 or 11, wherein

when obtaining the spatial characteristic matrix corresponding to the N channels of observed signals, the spatial feature extraction unit is specifically configured to: segment each of the N channels of observed signals into Q audio frames; determine, based on N audio frames corresponding to each audio frame group, a spatial characteristic matrix corresponding to each first audio frame group, to obtain Q spatial characteristic matrices, wherein N audio frames corresponding to each first audio frame group are N audio frames of the N channels of observed signals in a same time window; and obtain the spatial characteristic matrix corresponding to the N channels of observed signals based on the Q spatial characteristic matrices, wherein

$$c^F(k,n) = \frac{X^F(k,n) * X^{FH}(k,n)}{\left\| X^F(k,n) * X^{FH}(k,n) \right\|},$$

wherein
$c^F(k, n)$ represents the spatial characteristic matrix corresponding to each first audio frame group, n represents frame sequence numbers of the Q audio frames, k represents a frequency index of an $n^{th}$ audio frame, $X^F(k, n)$ represents a column vector formed by a representation of a $k^{th}$ frequency of an $n^{th}$ audio frame of each channel of observed signal in frequency domain, $X^{FH}(k, n)$ represents a transposition of $X^F(k, n)$, n is an integer, and $1 \leq n \leq Q$.

13. The apparatus according to any one of claims 10 to 12, wherein
when determining, based on the preset audio feature of each channel of source signal, the M demixing matrices, and the spatial characteristic matrix, the speaker quantity and the speaker identity corresponding to the N channels of observed signals, the determining unit is specifically configured to: perform first clustering on the spatial characteristic matrix to obtain P initial clusters, wherein each initial cluster corresponds to one initial clustering center matrix, and the initial clustering center matrix is used to represent a spatial position of a speaker corresponding to each initial cluster, and P is an integer greater than or equal to 1; determine M similarities, wherein the M similarities are similarities between the initial clustering center matrix corresponding to each initial cluster and the M demixing matrices; determine, based on the M similarities, a source signal corresponding to each initial cluster; and perform second clustering on a preset audio feature of the source signal corresponding to each initial cluster, to obtain the speaker quantity and the speaker identity corresponding to the N channels of observed signals.

14. An audio processing apparatus, comprising:

a processor, a communications interface, and a memory that are coupled to each other, wherein the communications interface is configured to receive N channels of observed signals collected by a microphone array, wherein N is an integer greater than or equal to 2; and
the processor is configured to: perform blind source separation on the N channels of observed signals to obtain M channels of source signals and M demixing matrices, wherein the M channels of source signals are in a one-to-one correspondence with the M demixing matrices, and M is an integer greater than or equal to 1; obtain a spatial characteristic matrix corresponding to the N channels of observed signals, wherein the spatial characteristic matrix is used to represent a correlation between the N channels of observed signals; obtain a preset audio feature of each of the M channels of source signals;
**characterized in that** the processor is further configured to
determine, based on the preset audio feature of each channel of source signal, the M demixing matrices, and the spatial characteristic matrix, a speaker quantity and a speaker identity corresponding to the N channels of observed signals.

15. A computer-readable storage medium, wherein the computer-readable storage medium stores a computer program, and the computer program is, when executed by hardware, configured to implement the method according to any one of claims 1 to 9.

**Patentansprüche**

1. Audiosignalverarbeitungsverfahren, das Folgendes umfasst:

Empfangen von N Kanälen gemessener Signale, die durch ein Mikrofonarray erfasst werden, und Durchführen einer blinden Quellentrennung an den N Kanälen gemessener Signale, um M Kanäle von Quellensignalen und M Entmischungsmatrizen zu erhalten, wobei die M Kanäle von Quellensignalen in einer Eins-zu-eins-Korrespondenz mit den M Entmischungsmatrizen sind, N eine ganze Zahl größer als oder gleich 2 ist und M eine ganze Zahl größer als oder gleich 1 ist;
Erhalten einer mit den N Kanälen gemessener Signale korrespondierenden Matrix räumlicher Eigenschaften, wobei die Matrix räumlicher Eigenschaften dazu genutzt wird, um eine Korrelation zwischen den N Kanälen gemessener Signale darzustellen; Erhalten eines voreingestellten Audiomerkmals eines jeden der M Kanäle von Quellensignalen;
wobei das Verfahren durch Folgendes gekennzeichnet ist:
Bestimmen einer Sprecheranzahl und einer Sprecheridentität, die mit den N Kanälen gemessener Signale korrespondieren, basierend auf dem voreingestellten Audiomerkmal eines jeden Quellensignalkanals, den M Entmischungsmatrizen und der Matrix räumlicher Eigenschaften.

2. Verfahren nach Anspruch 1, wobei das Erhalten eines voreingestellten Audiomerkmals eines jeden der M Kanäle von Quellensignalen Folgendes umfasst:

Aufteilen eines jeden der M Kanäle von Quellensignalen in Q Audioframes, wobei Q eine ganze Zahl größer als 1 ist; und
Erhalten eines voreingestellten Audiomerkmals eines jeden Audioframes eines jeden Quellensignalkanals.

3. Verfahren nach Anspruch 1 oder 2, wobei das Erhalten einer mit den N Kanälen gemessener Signale korrespondierenden Matrix räumlicher Eigenschaften Folgendes umfasst:

Aufteilen eines jeden der N Kanäle gemessener Signale in Q Audioframes,
Bestimmen einer mit jeder ersten Audioframegruppe korrespondierenden Matrix räumlicher Eigenschaften basierend auf N mit jeder Audioframegruppe korrespondierenden Audioframes, um Q Matrizen räumlicher Eigenschaften zu erhalten, wobei N mit jeder ersten Audioframegruppe korrespondierende Audioframes N Audioframes der N Kanäle gemessener Signale in einem selben Zeitfenster sind; und
Erhalten der mit den N Kanälen gemessener Signale korrespondierenden Matrix räumlicher Eigenschaften basierend auf den Q Matrizen räumlicher Eigenschaften, wobei

$$c^F(k,n) = \frac{X^F(\text{k,n}) * X^{FH}(\text{k,n})}{\|X^F(\text{k,n}) * X^{FH}(\text{k,n})\|} \text{ gilt,}$$

wobei

$c^F(k, n)$ die mit jeder ersten Audioframegruppe korrespondierende Matrix räumlicher Eigenschaften darstellt, $n$ Framesequenznummern der Q Audioframes darstellt, $k$ einen Frequenzindex eines n-ten Audioframes darstellt, $X^F(k, n)$ einen Spaltenvektor, der durch eine Darstellung einer k-ten Frequenz eines n-ten Audioframes eines jeden Kanals eines gemessenen Signals im Frequenzbereich gebildet wird, darstellt, $X^{FH}(k, n)$ eine Transposition von $X^F(k, n)$ darstellt, n eine ganze Zahl ist und $1 \leq n \leq Q$ gilt.

4. Verfahren nach einem der Ansprüche 1 bis 3, wobei das Bestimmen einer Sprecheranzahl und einer Sprecheridentität, die mit den N Kanälen gemessener Signale korrespondieren, basierend auf dem voreingestellten Audiomerkmal eines jeden Quellensignalkanals, den M Entmischungsmatrizen und der Matrix räumlicher Eigenschaften Folgendes umfasst:

   Durchführen einer ersten Clusterung an der Matrix räumlicher Eigenschaften, um P Anfangscluster zu erhalten, wobei jeder Anfangscluster mit einer Anfangsclusterungszentrumsmatrix korrespondiert und die Anfangsclusterungszentrumsmatrix dazu genutzt wird, um eine räumliche Position eines mit jedem Anfangscluster korrespondierenden Sprechers darzustellen, und P eine ganze Zahl größer als oder gleich 1 ist;
   Bestimmen von M Ähnlichkeiten, wobei die M Ähnlichkeiten Ähnlichkeiten zwischen der mit jedem Anfangscluster korrespondierenden Anfangsclusterungszentrumsmatrix und den M Entmischungsmatrizen sind;
   Bestimmen eines mit jedem Anfangscluster korrespondierenden Quellensignals basierend auf den M Ähnlichkeiten; und
   Durchführen einer zweiten Clusterung an einem voreingestellten Audiomerkmal des mit jedem Anfangscluster korrespondierenden Quellensignals, um die Sprecheranzahl und die Sprecheridentität, die mit den N Kanälen gemessener Signale korrespondieren, zu erhalten.

5. Verfahren nach Anspruch 4, wobei das Bestimmen eines mit jedem Anfangscluster korrespondierenden Quellensignals basierend auf den M Ähnlichkeiten Folgendes umfasst:

   Bestimmen einer maximalen Ähnlichkeit unter den M Ähnlichkeiten;
   Bestimmen einer Entmischungsmatrix, die unter den M Entmischungsmatrizen ist und die mit der maximalen Ähnlichkeit korrespondiert, als eine Zielentmischungsmatrix; und
   Bestimmen eines mit der Zielentmischungsmatrix korrespondierenden Quellensignals als das mit jedem Anfangscluster korrespondierende Quellensignal.

6. Verfahren nach Anspruch 4 oder 5, wobei das Durchführen einer zweiten Clusterung an einem voreingestellten Audiomerkmal des mit jedem Anfangscluster korrespondierenden Quellensignals, um die Sprecheranzahl und die Sprecheridentität, die mit den N Kanälen gemessener Signale korrespondieren, zu erhalten, Folgendes umfasst:
   Durchführen einer zweiten Clusterung an dem voreingestellten Audiomerkmal des mit jedem Anfangscluster korrespondierenden Quellensignals, um H Zielcluster zu erhalten, wobei die H Zielcluster die mit den N Kanälen gemessener Signale korrespondierende Sprecheranzahl darstellen, jeder Zielcluster mit einem Zielclusterungszentrum korrespondiert, jedes Zielclusterungszentrum ein voreingestelltes Audiomerkmal und mindestens eine Anfangsclusterungszentrumsmatrix umfasst, ein voreingestelltes, mit jedem Zielcluster korrespondierendes Audiomerkmal dazu genutzt wird, um eine Sprecheridentität eines mit dem Zielcluster korrespondierenden Sprechers darzustellen, und mindestens eine mit jedem Zielcluster korrespondierende Anfangsclusterungszentrumsmatrix dazu genutzt wird, um eine räumliche Position des Sprechers darzustellen.

7. Verfahren nach Anspruch 6, wobei das Verfahren ferner Folgendes umfasst:
   Erhalten ausgegebener Audiodaten, die eine Sprecherkennung umfassen, basierend auf der Sprecheranzahl und der Sprecheridentität, die mit den N Kanälen gemessener Signale korrespondieren.

8. Verfahren nach Anspruch 7, wobei das Erhalten ausgegebener Audiodaten, die eine Sprecherkennung umfassen, basierend auf der Sprecheranzahl und der Sprecheridentität, die mit den N Kanälen gemessener Signale korrespondieren, Folgendes umfasst:

   Bestimmen von K Abständen, wobei die K Abstände Abstände zwischen der mit jeder ersten Audioframegruppe korrespondierenden Matrix räumlicher Eigenschaften und der mindestens einen mit jedem Zielcluster korrespondierenden Anfangsclusterungszentrumsmatrix sind, jede erste Audioframegruppe N Audioframes der N Kanäle gemessener Signale in einem selben Zeitfenster umfasst und $K \geq H$ gilt;

Bestimmen von L mit jeder ersten Audioframegruppe korrespondierenden Zielclustern basierend auf den K Abständen, wobei $L \leq H$ gilt;

Extrahieren von L mit jeder ersten Audioframegruppe korrespondierenden Audioframes aus den M Kanälen von Quellensignalen, wobei ein mit den L Audioframes korrespondierendes Zeitfenster gleich einem mit der ersten Audioframegruppe korrespondierenden Zeitfenster ist;

Bestimmen von L Ähnlichkeiten, wobei die L Ähnlichkeiten Ähnlichkeiten zwischen einem voreingestellten Audiomerkmal eines jeden der L Audioframes und voreingestellten, mit den L Zielclustern korrespondierenden Audiomerkmalen sind;

Bestimmen eines mit jedem der L Audioframes korrespondierenden Zielclusters basierend auf den L Ähnlichkeiten; und

Erhalten der ausgegebenen Audiodaten, die die Sprecherkennung umfassen, basierend auf dem mit jedem Audioframe korrespondierenden Zielcluster, wobei die Sprecherkennung dazu genutzt wird, um eine Sprecheranzahl und/oder eine Sprecheridentität, die mit jedem Audioframe der ausgegebenen Audiodaten korrespondieren, anzuzeigen.

9. Verfahren nach Anspruch 7, wobei das Erhalten ausgegebener Audiodaten, die eine Sprecherkennung umfassen, basierend auf der Sprecheranzahl und der Sprecheridentität, die mit den N Kanälen gemessener Signale korrespondieren, Folgendes umfasst:

Bestimmen von H Ähnlichkeiten, wobei die H Ähnlichkeiten Ähnlichkeiten zwischen einem voreingestellten Audiomerkmal eines jeden Audioframes in jeder zweiten Audioframegruppe und voreingestellten Audiomerkmalen der H Zielcluster sind und jede zweite Audioframegruppe Audioframes der M Kanäle von Quellensignalen in einem selben Zeitfenster umfasst,

Bestimmen eines mit jedem Audioframe in jeder zweiten Audioframegruppe korrespondierenden Zielclusters basierend auf den H Ähnlichkeiten; und

Erhalten der ausgegebenen Audiodaten, die die Sprecherkennung umfassen, basierend auf dem mit jedem Audioframe korrespondierenden Zielcluster, wobei die Sprecherkennung dazu genutzt wird, um eine Sprecheranzahl und/oder eine Sprecheridentität, die mit jedem Audioframe der ausgegebenen Audiodaten korrespondieren, anzuzeigen.

10. Audioverarbeitungsvorrichtung, die Folgendes umfasst:

eine Audiotrennungseinheit, die für Folgendes konfiguriert ist: Empfangen von N Kanälen gemessener Signale, die durch ein Mikrofonarray erfasst werden, und Durchführen einer blinden Quellentrennung an den N Kanälen gemessener Signale, um M Kanäle von Quellensignalen und M Entmischungsmatrizen zu erhalten, wobei die M Kanäle von Quellensignalen in einer Eins-zu-eins-Korrespondenz mit den M Entmischungsmatrizen sind, N eine ganze Zahl größer als oder gleich 2 ist und M eine ganze Zahl größer als oder gleich 1 ist;

eine Einheit zur Extraktion räumlicher Merkmale, um eine mit den N Kanälen gemessener Signale korrespondierende Matrix räumlicher Eigenschaften zu erhalten, wobei die Matrix räumlicher Eigenschaften dazu genutzt wird, um eine Korrelation zwischen den N Kanälen gemessener Signale darzustellen,

eine Audiomerkmalsextraktionseinheit, die konfiguriert ist, um ein voreingestelltes Audiomerkmal eines jeden der M Kanäle von Quellensignalen zu erhalten,

wobei die Audioverarbeitungsvorrichtung **dadurch gekennzeichnet ist, dass** sie ferner Folgendes umfasst:

eine Bestimmungseinheit, die konfiguriert ist, um basierend auf dem voreingestellten Audiomerkmal eines jeden Quellensignalkanals, den M Entmischungsmatrizen und der Matrix räumlicher Eigenschaften eine Sprecheranzahl und eine Sprecheridentität, die mit den N Kanälen gemessener Signale korrespondieren, zu bestimmen.

11. Vorrichtung nach Anspruch 10, wobei
die Audiomerkmalsextraktionseinheit, wenn sie das voreingestellte Audiomerkmal eines jeden der M Kanäle von Quellensignalen erhält, speziell für Folgendes konfiguriert ist: Aufteilen eines jeden der M Kanäle von Quellensignalen in Q Audioframes, wobei Q eine ganze Zahl größer als 1 ist; und Erhalten eines voreingestellten Audiomerkmals eines jeden Audioframes eines jeden Quellensignalkanals.

12. Vorrichtung nach Anspruch 10 oder 11, wobei
die Einheit zur Extraktion räumlicher Merkmale, wenn sie die mit den N Kanälen gemessener Signale korrespondierende Matrix räumlicher Eigenschaften erhält, speziell für Folgendes konfiguriert ist: Aufteilen eines jeden der N Kanäle gemessener Signale in Q Audioframes, Bestimmen einer mit jeder ersten Audioframegruppe korrespondierenden Matrix räumlicher Eigenschaften basierend auf N mit jeder Audioframegruppe korrespondierenden Audioframes, um Q Matrizen räumlicher Eigenschaften zu erhalten, wobei N mit jeder ersten Audioframegruppe korrespondierende Audioframes N Audioframes der N Kanäle gemessener Signale in einem selben Zeitfenster sind; und Erhalten der mit den N Kanälen gemessener Signale korrespondierenden Matrix räumlicher Eigenschaften basierend auf den Q Matrizen räumlicher Eigenschaften, wobei

$$c^F(k,n) = \frac{\overline{X^F}(\mathrm{k,n}) * X^{FH}(\mathrm{k,n})}{\|X^F(\mathrm{k,n}) * X^{FH}(\mathrm{k,n})\|} \text{ gilt,}$$

wobei
$c^F(k, n)$ die mit jeder ersten Audioframegruppe korrespondierende Matrix räumlicher Eigenschaften darstellt, n Framesequenznummern der Q Audioframes darstellt, k einen Frequenzindex eines n-ten Audioframes darstellt, $X^F(k, n)$ einen Spaltenvektor, der durch eine Darstellung einer k-ten Frequenz eines n-ten Audioframes eines jeden Kanals eines gemessenen Signals im Frequenzbereich gebildet wird, darstellt, $X^{FH}(k, n)$ eine Transposition von $X^F(k, n)$ darstellt, n eine ganze Zahl ist und $1 \leq n \leq Q$ gilt.

13. Vorrichtung nach einem der Ansprüche 10 bis 12, wobei
die Bestimmungseinheit, wenn sie basierend auf dem voreingestellten Audiomerkmal eines jeden Quellensignalkanals, den M Entmischungsmatrizen und der Matrix räumlicher Eigenschaften die Sprecheranzahl und die Sprecheridentität, die mit den N Kanälen gemessener Signale korrespondieren, bestimmt, speziell für Folgendes konfiguriert ist: Durchführen einer ersten Clusterung an der Matrix räumlicher Eigenschaften, um P Anfangscluster zu erhalten, wobei jeder Anfangscluster mit einer Anfangsclusterungszentrumsmatrix korrespondiert und die Anfangsclusterungszentrumsmatrix dazu genutzt wird, um eine räumliche Position eines mit jedem Anfangscluster korrespondierenden Sprechers darzustellen, und P eine ganze Zahl größer als oder gleich 1 ist; Bestimmen von M Ähnlichkeiten, wobei die M Ähnlichkeiten Ähnlichkeiten zwischen der mit jedem Anfangscluster korrespondierenden Anfangsclusterungszentrumsmatrix und den M Entmischungsmatrizen sind; Bestimmen eines mit jedem Anfangscluster korrespondierenden Quellensignals basierend auf den M Ähnlichkeiten; und Durchführen einer zweiten Clusterung an einem voreingestellten Audiomerkmal des mit jedem Anfangscluster korrespondierenden Quellensignals, um die Sprecheranzahl und die Sprecheridentität, die mit den N Kanälen gemessener Signale korrespondieren, zu erhalten.

14. Audioverarbeitungsvorrichtung, die Folgendes umfasst:

einen Prozessor, eine Kommunikationsschnittstelle und einen Speicher, die miteinander gekoppelt sind, wobei die Kommunikationsschnittstelle konfiguriert ist, um N Kanäle gemessener Signale, die durch ein Mikrofonarray erfasst werden, zu empfangen, wobei N eine ganze Zahl größer als oder gleich 2 ist; und
der Prozessor für Folgendes konfiguriert ist: Durchführen einer blinden Quellentrennung an den N Kanälen gemessener Signale, um M Kanäle von Quellensignalen und M Entmischungsmatrizen zu erhalten, wobei die M Kanäle von Quellensignalen in einer Eins-zu-eins-Korrespondenz mit den M Entmischungsmatrizen sind und M eine ganze Zahl größer als oder gleich 1 ist; Erhalten einer mit den N Kanälen gemessener Signale korrespondierenden Matrix räumlicher Eigenschaften, wobei die Matrix räumlicher Eigenschaften dazu genutzt wird, um eine Korrelation zwischen den N Kanälen gemessener Signale darzustellen; Erhalten eines voreingestellten Audiomerkmals eines jeden der M Kanäle von Quellensignalen;
dadurch gekennzeichnet, dass der Prozessor ferner für Folgendes konfiguriert ist:
Bestimmen einer Sprecheranzahl und einer Sprecheridentität, die mit den N Kanälen gemessener Signale korrespondieren, basierend auf dem voreingestellten Audiomerkmal eines jeden Quellensignalkanals, den M Entmischungsmatrizen und der Matrix räumlicher Eigenschaften.

15. Computerlesbares Speichermedium, wobei das computerlesbare Speichermedium ein Computerprogramm speichert und das Computerprogramm, wenn es durch Hardware abgearbeitet wird, konfiguriert ist, um das Verfahren nach einem der Ansprüche 1 bis 9 zu implementieren.

**Revendications**

1.  Procédé de traitement de signaux audio comprenant les étapes suivantes :

    recevoir N canaux de signaux observés collectés par un réseau de microphones, et effectuer une séparation aveugle des sources sur les N canaux de signaux observés pour obtenir M canaux de signaux sources et M matrices de démixage, où les M canaux de signaux sources sont en correspondance biunivoque avec les M matrices de démixage, N est un nombre entier supérieur ou égal à 2, et M est un nombre entier supérieur ou égal à 1 ;
    obtenir une matrice de caractéristiques spatiales correspondant aux N canaux de signaux observés, où la matrice de caractéristiques spatiales est utilisée pour représenter une corrélation entre les N canaux de signaux observés ;
    obtenir une caractéristique audio prédéfinie de chacun des M canaux de signaux sources ;
    le procédé étant **caractérisé par** l'étape suivante :
    déterminer, sur la base de la caractéristique audio prédéfinie de chaque canal de signal source, les M matrices de démixage et la matrice de caractéristiques spatiales, une quantité de locuteurs et une identité de locuteur correspondant aux N canaux de signaux observés.

2.  Procédé selon la revendication 1, dans lequel l'obtention d'une caractéristique audio prédéfinie de chacun des M canaux de signaux sources comprend les étapes suivantes :

    segmenter chacun des M canaux de signaux sources en Q trames audio, où Q est un nombre entier supérieur à 1 ; et
    obtenir une caractéristique audio prédéfinie de chaque trame audio de chaque canal de signal source.

3.  Procédé selon la revendication 1 ou 2, dans lequel l'obtention d'une matrice de caractéristiques spatiales correspondant aux N canaux de signaux observés comprend les étapes suivantes :

    segmenter chacun des N canaux de signaux observés en Q trames audio ;
    déterminer, sur la base de N trames audio correspondant à chaque groupe de trames audio, une matrice de caractéristiques spatiales correspondant à chaque premier groupe de trames audio, pour obtenir Q matrices de caractéristiques spatiales, où N trames audio correspondant à chaque premier groupe de trames audio sont N trames audio des N canaux de signaux observés dans une même fenêtre temporelle ; et
    obtenir la matrice de caractéristiques spatiales correspondant aux N canaux de signaux observés sur la base des Q matrices de caractéristiques spatiales, où :

    $$c^F(k, n) = \frac{X^F(k,n) * X^{FH}(k,n)}{\|X^F(k,n) * X^{FH}(k,n)\|},$$

    où
    $c^F(k, n)$ représente la matrice de caractéristiques spatiales correspondant à chaque premier groupe de trames audio, n représente les numéros de séquence de trame des Q trames audio, k représente un indice de fréquence d'une $n^{ième}$ trame audio, $X^F(k, n)$ représente un vecteur colonne formé par une représentation d'une $k^{ième}$ fréquence d'une $n^{ième}$ trame audio de chaque canal de signal observé dans le domaine fréquentiel, $X^{FH}(k,n)$ représente une transposition de $X^F(k,n)$, n est un nombre entier, et $1 \leq n \leq Q$.

4.  Procédé selon l'une quelconque des revendications 1 à 3, dans lequel la détermination, sur la base de la caractéristique audio prédéfinie de chaque canal de signal source, des M matrices de démixage, et de la matrice de caractéristiques spatiales, d'une quantité de locuteurs et d'une identité de locuteur correspondant aux N canaux de signaux observés comprend les étapes suivantes :

    effectuer un premier regroupement sur la matrice de caractéristiques spatiales pour obtenir P regroupements initiaux, où chaque regroupement initial correspond à une matrice de centre de regroupement initial, et la matrice de centre de regroupement initial est utilisée pour représenter une position spatiale d'un locuteur correspondant à chaque regroupement initial, et P est un nombre entier supérieur ou égal à 1 ;
    déterminer M similarités, où les M similarités sont des similarités entre la matrice de centre de regroupement initial correspondant à chaque regroupement initial et les M matrices de démixage ;

déterminer, sur la base des M similarités, un signal source correspondant à chaque regroupement initial ; et effectuer un second regroupement sur une caractéristique audio prédéfinie du signal source correspondant à chaque regroupement initial pour obtenir la quantité de locuteurs et l'identité de locuteur correspondant aux N canaux de signaux observés.

**5.** Procédé selon la revendication 4, dans lequel la détermination, sur la base des M similarités, d'un signal source correspondant à chaque regroupement initial comprend les étapes suivantes :

déterminer une similarité maximale dans les M similarités ;
déterminer, comme matrice de démixage cible, une matrice de démixage qui se trouve dans les M matrices de démixage et qui correspond à la similarité maximale ; et
déterminer un signal source correspondant à la matrice de démixage cible en tant que signal source correspondant à chaque regroupement initial.

**6.** Procédé selon la revendication 4 ou 5, dans lequel la réalisation d'un second regroupement sur une caractéristique audio prédéfinie du signal source correspondant à chaque regroupement initial, pour obtenir la quantité de locuteurs et l'identité des locuteurs correspondant aux N canaux de signaux observés, comprend les étapes suivantes :
effectuer un second regroupement sur la caractéristique audio prédéfinie du signal source correspondant à chaque regroupement initial, pour obtenir H regroupements cibles, où les H regroupements cibles représentent la quantité de locuteurs correspondant aux N canaux de signaux observés, chaque regroupement cible correspondant à un centre de regroupement cible, chaque centre de regroupement cible comprend une caractéristique audio prédéfinie et au moins une matrice de centre de regroupement initial, une caractéristique audio prédéfinie correspondant à chaque regroupement cible est utilisée pour représenter une identité de locuteur d'un locuteur correspondant au regroupement cible, et au moins une matrice de centre de regroupement initial correspondant à chaque regroupement cible est utilisée pour représenter une position spatiale du locuteur.

**7.** Procédé selon la revendication 6, le procédé comprenant en outre l'étape suivante :
obtenir, sur la base de la quantité de locuteurs et de l'identité de locuteur correspondant aux N canaux de signaux observés, une sortie audio comprenant une étiquette de locuteur.

**8.** Procédé selon la revendication 7, dans lequel l'obtention, sur la base de la quantité de locuteurs et de l'identité de locuteur correspondant aux N canaux de signaux observés, d'une sortie audio comprenant une étiquette de locuteur comprend les étapes suivantes :

déterminer K distances, où les K distances sont des distances entre la matrice de caractéristiques spatiales correspondant à chaque premier groupe de trames audio et l'au moins une matrice de centre de regroupement initial correspondant à chaque regroupement cible, chaque premier groupe de trames audio comprend N trames audio des N canaux de signaux observés dans une même fenêtre temporelle, et $K \geq H$ ;
déterminer, sur la base des K distances, L regroupements cibles correspondant à chaque premier groupe de trames audio, où $L \leq H$ ;
extraire, à partir des M canaux de signaux sources, L trames audio correspondant à chaque premier groupe de trames audio, où une fenêtre temporelle correspondant aux L trames audio est la même qu'une fenêtre temporelle correspondant au premier groupe de trames audio ;
déterminer L similarités, où les L similarités sont des similarités entre une caractéristique audio prédéfinie de chacune des L trames audio et des caractéristiques audio prédéfinies correspondant aux L regroupements cibles ;
déterminer, sur la base des L similarités, un regroupement cible correspondant à chacune des L trames audio ; et
obtenir, sur la base du regroupement cible correspondant à chaque trame audio, la sortie audio comprenant l'étiquette de locuteur, où l'étiquette de locuteur est utilisée pour indiquer une quantité de locuteurs et/ou une identité de locuteur correspondant à chaque trame audio de l'audio de sortie.

**9.** Procédé selon la revendication 7, dans lequel l'obtention, sur la base de la quantité de locuteurs et de l'identité de locuteur correspondant aux N canaux de signaux observés, de la sortie audio comprenant une étiquette de locuteur comprend les étapes suivantes :

déterminer H similarités, où les H similarités sont des similarités entre une caractéristique audio prédéfinie de chaque trame audio dans chaque second groupe de trames audio et des caractéristiques audio prédéfinies des H regroupements cibles, et chaque second groupe de trames audio comprend des trames audio des M canaux de signaux sources dans une même fenêtre temporelle ;
déterminer, sur la base des H similarités, un regroupement cible correspondant à chaque trame audio dans chaque second groupe de trames audio ; et
obtenir, sur la base du regroupement cible correspondant à chaque trame audio, la sortie audio comprenant l'étiquette de locuteur, où l'étiquette de locuteur est utilisée pour indiquer une quantité de locuteurs et/ou une identité de locuteur correspondant à chaque trame audio de l'audio de sortie.

10. Appareil de traitement audio comprenant :

une unité de séparation audio, configurée pour recevoir N canaux de signaux observés collectés par un réseau de microphones, et effectuer une séparation aveugle des sources sur les N canaux de signaux observés pour obtenir M canaux de signaux sources et M matrices de démixage, où les M canaux de signaux sources sont en correspondance biunivoque avec les M matrices de démixage, N est un nombre entier supérieur ou égal à 2, et M est un nombre entier supérieur ou égal à 1 ;
une unité d'extraction de caractéristiques spatiales, configurée pour obtenir une matrice de caractéristiques spatiales correspondant aux N canaux de signaux observés, où la matrice de caractéristiques spatiales est utilisée pour représenter une corrélation entre les N canaux de signaux observés ;
une unité d'extraction de caractéristiques audio, configurée pour obtenir une caractéristique audio prédéfinie de chacun des M canaux de signaux sources ;
l'appareil de traitement audio étant **caractérisé en ce qu'**il comprend en outre :
une unité de détermination, configurée pour déterminer, sur la base de la caractéristique audio prédéfinie de chaque canal de signal source, les M matrices de démixage et de la matrice de caractéristiques spatiales, une quantité de locuteurs et une identité de locuteur correspondant aux N canaux de signaux observés.

11. Appareil selon la revendication 10, dans lequel :
lors de l'obtention de la caractéristique audio prédéfinie de chacun des M canaux de signaux sources, l'unité d'extraction de caractéristiques audio est spécifiquement configurée pour segmenter chacun des M canaux de signaux sources en Q trames audio, où Q est un nombre entier supérieur à 1, et obtenir une caractéristique audio prédéfinie de chaque trame audio de chaque canal de signal source.

12. Appareil selon la revendication 10 ou la revendication 11, dans lequel :

lors de l'obtention de la matrice de caractéristiques spatiales correspondant aux N canaux de signaux observés, l'unité d'extraction de caractéristiques spatiales est spécifiquement configurée pour : segmenter chacun des N canaux de signaux observés en Q trames audio ; déterminer, sur la base de N trames audio correspondant à chaque groupe de trames audio, une matrice de caractéristiques spatiales correspondant à chaque premier groupe de trames audio, pour obtenir Q matrices de caractéristiques spatiales, où N trames audio correspondant à chaque premier groupe de trames audio sont N trames audio des N canaux de signaux observés dans une même fenêtre temporelle ; et obtenir la matrice de caractéristiques spatiales correspondant aux N canaux de signaux observés sur la base des Q matrices de caractéristiques spatiales, où :

$$c^F(k, n) = \frac{X^F(k,n) * X^{FH}(k,n)}{\|X^F(k,n) * X^{FH}(k,n)\|},$$

où
$c^F(k, n)$ représente la matrice de caractéristiques spatiales correspondant à chaque premier groupe de trames audio, n représente les numéros de séquence de trame des Q trames audio, k représente un indice de fréquence d'une $n^{ième}$ trame audio, $X^F(k, n)$ représente un vecteur colonne formé par une représentation d'une $k^{ième}$ fréquence d'une $n^{ième}$ trame audio de chaque canal de signal observé dans le domaine fréquentiel, $X^{FH}(k,n)$ représente une transposition de $X^F(k,n)$, n est un nombre entier, et $1 \leq n \leq Q$.

13. Appareil selon l'une quelconque des revendications 10 à 12, dans lequel :
lors de la détermination, sur la base de la caractéristique audio prédéfinie de chaque canal de signal source, des M matrices de démixage, et de la matrice de caractéristiques spatiales, de la quantité de locuteurs et de l'identité de locuteur correspondant aux N canaux de signaux observés, l'unité de détermination est spécifiquement configurée pour : effectuer un premier regroupement sur la matrice de caractéristiques spatiales pour obtenir P regroupements initiaux, où chaque regroupement initial correspond à une matrice de centre de regroupement initial, et la matrice de centre de regroupement initial est utilisée pour représenter une position spatiale d'un locuteur correspondant à chaque regroupement initial, et P est un nombre entier supérieur ou égal à 1 ; déterminer M similarités, où les M similarités sont des similarités entre la matrice de centre de regroupement initial correspondant à chaque regroupement initial et les M matrices de démixage ; déterminer, sur la base des M similarités, un signal source correspondant à chaque regroupement initial ; et effectuer un second regroupement sur une caractéristique audio prédéfinie du signal source correspondant à chaque regroupement initial, pour obtenir la quantité de locuteurs et l'identité de locuteur correspondant aux N canaux de signaux observés.

**14.** Appareil de traitement audio comprenant :
un processeur, une interface de communication et une mémoire qui sont couplés les uns aux autres, où :

l'interface de communication est configurée pour recevoir N canaux de signaux observés collectés par un réseau de microphones, où N est un nombre entier supérieur ou égal à 2 ; et
le processeur est configuré pour effectuer une séparation aveugle des sources sur les N canaux de signaux observés pour obtenir M canaux de signaux sources et M matrices de démixage, où les M canaux de signaux sources sont en correspondance biunivoque avec les M matrices de démixage, et M est un nombre entier supérieur ou égal à 1 ; obtenir une matrice de caractéristiques spatiales correspondant aux N canaux de signaux observés, où la matrice de caractéristiques spatiales est utilisée pour représenter une corrélation entre les N canaux de signaux observés ; obtenir une caractéristique audio prédéfinie de chacun des M canaux de signaux sources ;
**caractérisé en ce que** le processeur est en outre configuré pour déterminer, sur la base de la caractéristique audio prédéfinie de chaque canal de signal source, les M matrices de démixage et la matrice de caractéristiques spatiales, une quantité de locuteurs et une identité de locuteur correspondant aux N canaux de signaux observés.

**15.** Support de stockage lisible par ordinateur, le support de stockage lisible par ordinateur stockant un programme informatique, et le programme informatique, lorsqu'il est exécuté par un matériel, étant configuré pour mettre en oeuvre le procédé selon l'une quelconque des revendications 1 à 9.

FIG. 1A

An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices    S101

The audio processing apparatus obtains a spatial characteristic matrix corresponding to the N channels of observed signals, where the spatial characteristic matrix is used to represent a correlation between the N channels of observed signals    S102

The audio processing apparatus obtains a preset audio feature of each of the M channels of source signals    S103

The audio processing apparatus determines, based on the preset audio feature of each channel of source signal, the M demixing matrices, and the spatial characteristic matrix, a speaker quantity and a speaker identity corresponding to the N channels of observed signals    S104

FIG. 1B

An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices

S201

The audio processing apparatus obtains a spatial characteristic matrix corresponding to the N channels of observed signals, where the spatial characteristic matrix is used to represent a correlation between the N channels of observed signals

S202

The audio processing apparatus obtains a preset audio feature of each of the M channels of source signals

S203

The audio processing apparatus determines, based on the preset audio feature of each channel of source signal, the M demixing matrices, and the spatial characteristic matrix, a speaker quantity and a speaker identity corresponding to the N channels of observed signals

S204

The audio processing apparatus outputs, based on the speaker quantity and the speaker identity corresponding to the N channels of observed signals, an audio signal including a first speaker label, where the first speaker label is used to indicate a speaker quantity corresponding to each audio frame of the audio signal

S205

FIG. 2A

FIG. 2B

FIG. 2C

$0-t_1$

Speaker A

Position $W_3$

Speaker B

$t_1-t_2$

FIG. 2D

An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices

S301

The audio processing apparatus obtains a spatial characteristic matrix corresponding to the N channels of observed signals, where the spatial characteristic matrix is used to represent a correlation between the N channels of observed signals

S302

The audio processing apparatus obtains a preset audio feature of each of the M channels of source signals

S303

The audio processing apparatus determines, based on the preset audio feature of each channel of source signal, the M demixing matrices, and the spatial characteristic matrix, a speaker quantity and a speaker identity corresponding to the N channels of observed signals

S304

The audio processing apparatus obtains, based on the speaker quantity and the speaker identity corresponding to the N channels of observed signals, output audio including a second speaker label, where the second speaker label is used to indicate a speaker identity corresponding to each audio frame of the output audio

S305

FIG. 3

An audio processing apparatus receives N channels of observed signals collected by a microphone array, and performs blind source separation on the N channels of observed signals to obtain M channels of source signals and M demixing matrices, where the M channels of source signals are in a one-to-one correspondence with the M demixing matrices — S401

The audio processing apparatus obtains a spatial characteristic matrix corresponding to the N channels of observed signals, where the spatial characteristic matrix is used to represent a correlation between the N channels of observed signals — S402

The audio processing apparatus obtains a preset audio feature of each of the M channels of source signals — S403

The audio processing apparatus determines, based on the preset audio feature of each channel of source signal, the M demixing matrices, and the spatial characteristic matrix, a speaker quantity and a speaker identity corresponding to the N channels of observed signals — S404

The audio processing apparatus obtains, based on the speaker quantity and the speaker identity corresponding to the N channels of observed signals, output audio including a third speaker label, where the third speaker label is used to indicate a speaker quantity and a speaker identity corresponding to each audio frame of the output audio — S405

FIG. 4

FIG. 5A

FIG. 5B

FIG. 5C

FIG. 6

700

710   720   730

| Memory | Communications interface | Processor |

740

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910369726
- US 20090310444 A1